# EUROPEAN PATENT SPECIFICATION

(11) **EP 3 618 011 B1**
(45) Date of publication and mention of the grant of the patent: **09.08.2023**
(21) Application number: 19194400.8
(22) Date of filing: 29.08.2019
(51) Int. Cl.: G07C 5/00, G07C 5/08

(54) **DATA COLLECTION APPARATUS, ON-VEHICLE DEVICE, DATA COLLECTION SYSTEM, AND DATA COLLECTION METHOD**
DATENSAMMELVORRICHTUNG, FAHRZEUGINTERNE VORRICHTUNG, DATENSAMMELSYSTEM UND DATENSAMMELVERFAHREN
APPAREIL DE COLLECTE DE DONNÉES, DISPOSITIF EMBARQUÉ, SYSTÈME DE COLLECTE DE DONNÉES ET PROCÉDÉ DE COLLECTE DE DONNÉES

(30) Priority: 31.08.2018 JP 2018163947; 31.08.2018 JP 2018163958; 31.08.2018 JP 2018163959; 14.09.2018 JP 2018172759; 02.11.2018 JP 2018207594
(43) Date of publication of application: 04.03.2020
(73) Proprietor: DENSO TEN LIMITED, Kobe-shi, Hyogo 6528510 (JP)
(72) Inventor: TSUYUNASHI, Masashi, Hyogo, 652-8510 (JP); MATSUO, Tomohiro, Hyogo, 652-8510 (JP); HIRASHIMA, Yoshitaka, Hyogo, 652-8510 (JP); OZAKI, Yukisuke, Hyogo, 652-8510 (JP); FUJIO, Akihide, Hyogo, 652-8510 (JP); KITAHARA, Toshio, Hyogo, 652-8510 (JP)
(74) Representative: Haseltine Lake Kempner LLP

(56) References cited:
- EP-A1- 3 319 050
- WO-A1-2016/098284
- US-A1- 2008 320 036
- US-A1- 2017 032 589
- US-A1- 2017 200 061

## Description

### FIELD

The embodiments discussed herein are directed to a data collection apparatus, an on-vehicle device, a data collection system, and a data collection method.

### BACKGROUND

Conventionally, a data collection apparatus that collects road information from an on-vehicle device mounted on each vehicle has been known. Such a data collection apparatus filters a vehicle from which road information is to be collected based on position information on each vehicle, and collects road information at a desired position (see, for example, Japanese Laid-open Patent Publication No. 2018-55581).

In recent years, a wide variety of data in addition to road information needs to be quickly collected from on-vehicle devices. However, if a wide variety of data is collected from each on-vehicle device, a communication line may be congested to take much time until data is provided.

One aspect of embodiments has been made in view of the above, and it is an object thereof to provide a data collection apparatus, a data collection system, and a data collection method capable of quickly collecting data.

Reference may be made to any of:
US 2017/032589 A1, which is related to an orchestration manager for instigating on demand vehicle information exchange between a plurality of vehicles and a remote server, the orchestration manager configured to queue, prioritize and send data requests to one or more vehicles, process data received from the, or each, vehicle, and deliver data request responses to the remote server;
EP 3 319 050 A1, which is related to a vehicle operation data collection apparatus, a vehicle operation data collection system, and a vehicle operation data collection method; and
WO 2016/098284 A1, which is related to a remote vehicle data collection system in which a center prescribes, to a subject vehicle, a collection condition for vehicle data through wireless communication, an instruction executing section reads in and executes an instruction described as the collection condition, a determination section determines whether environment information prescribed by the collection condition agrees with the vehicle environment of the subject vehicle, and a communication section delivers, to the center, the vehicle data of a time at which the agreement is established.

### SUMMARY

The present invention is defined by the independent claims, to which reference should be made. Specific embodiments are defined in the dependent claims. There is disclosed herein a data collection apparatus, comprising: a reception unit that receives a collection request for vehicle acquisition data obtained by each vehicle; a collection condition data generation unit that generates collection condition data indicating a collection condition of the vehicle acquisition data based on the collection request received by the reception unit ; a collection condition setting unit that transmits the collection condition data generated by the collection condition data generation unit to each vehicle, and sets the collection condition data to each vehicle; and an acquired data collection unit that receives vehicle acquisition data satisfying the collection condition transmitted from each vehicle, wherein the collection condition setting unit is capable of setting a plurality of collection conditions, and the acquired data collection unit filters the collection conditions and collects vehicle acquisition data.

According to an aspect of the embodiments, data can be quickly collected.

### BRIEF DESCRIPTION OF DRAWINGS

Further complete recognition and resultant advantages of the present invention are easily understood by reading the following detailed description of the invention with reference to the accompanying drawings.
FIG. 1A to Fig 1C are diagrams illustrating operation of a data collection system.
FIG. 2A is a diagram illustrating an example of tag data.
FIG. 2B is a diagram illustrating an example of a collection condition ID.
FIG. 2C is a data transition diagram in the data collection system.
FIG. 3 is a diagram for describing a conventional technology.
FIG. 4 is a diagram illustrating a collection example of data in a data collection apparatus according to the embodiment.
FIG. 5A is a diagram illustrating the outline of a data collection method according to a first embodiment.
FIG. 5B is a diagram illustrating an example of a condition file.
FIG. 6 is a system schematic diagram of the data collection system.
FIG. 7 is a block diagram of a data collection apparatus.
FIG. 8 is a diagram illustrating an example of a vehicle information table.
FIG. 9 is a diagram illustrating an example of a collection condition table.
FIG. 10 is a diagram illustrating an example of a connection request.
FIG. 11 is a block diagram of an on-vehicle device.
FIG. 12 and FIG. 13 are flowcharts illustrating procedures of processing executed by the data collection apparatus.
FIG. 14 is a flowchart illustrating a procedure of processing executed by an on-vehicle device.
FIG. 15 is a diagram illustrating the outline of a data collection method according to a second embodiment.
FIG. 16 is a block diagram of a data collection apparatus.
FIG. 17 is a diagram illustrating an example of a reception screen.
FIG. 18 is a flowchart illustrating a procedure of processing executed by the data collection apparatus.
FIG. 19 is a flowchart illustrating a procedure of processing executed by an on-vehicle device.
FIGS. 20A to 20H are schematic explanation diagrams of a data collection method according to a third embodiment.
FIG. 21 is a block diagram of a configuration example of a data collection system according to the third embodiment.
FIG. 22A and FIG. 22B are diagrams illustrating an example of extraction processing.
FIG. 23 is a diagram illustrating a processing sequence executed by the data collection system according to the third embodiment.

### DESCRIPTION OF EMBODIMENTS

Referring to the accompanying drawings, a data collection apparatus, a data collection system, and a data collection method disclosed herein are described in detail below. The present invention is not limited by the embodiments.

### Basic concept

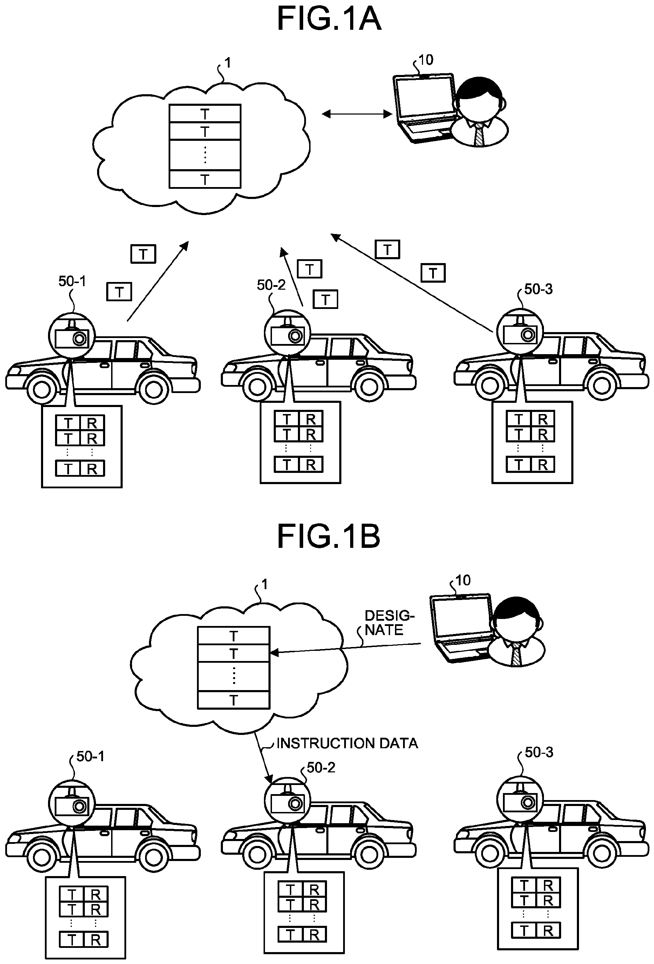

First, the overall basic operation in data collection technology is described with reference to the accompanying drawings of FIG. 1A to FIG. 4. First, a series of flows until data is provided to a data user in a data collection system is described with reference to FIG. 1A to FIG. 1C.

FIG. 1A to FIG. 1C are diagrams illustrating the operation of the data collection system. As illustrated in FIG. 1A, the data collection system includes a user terminal 10 used by a data user such as a developer of an autonomous driving car, a data collection apparatus (server) 1 formed by cloud, and on-vehicle devices 50-1, 50-2, 50-3 ... mounted on vehicles (referred to as "on-vehicle device 50" when indicating general on-vehicle device). It is effective that the on-vehicle device 50 is used also as a drive recorder having a camera, an image storage unit (memory), various kinds of sensors such as an acceleration sensor and a GPS, and a microcomputer in terms of efficient use of hardware configuration.

First, the data user sets a data collection condition through the user terminal 10 connected to the data collection apparatus 1. In this case, the data collection apparatus 1 creates tag data generation data for generating tag data having characteristics of index data used for searching and schematic grasping of data to be added to collected real data (example of vehicle acquisition data).

The tag data generation data is created based on operation by the data user by using a computer program or generation data stored in the user terminal 10 or the data collection apparatus 1. The data collection condition and the tag data generation data are stored in the data collection apparatus 1. The data collection condition and the tag data generation data are transmitted to a data collection target vehicle (data user designates vehicle condition) and stored in each on-vehicle device 50.

Next, each on-vehicle device 50 monitors output data from a sensor and a camera, and when an event satisfying a data collection condition stored therein, stores corresponding real data R in a storage device. Each on-vehicle device 50 generates and stores therein tag data T corresponding to the real data R based on the real data R and the stored tag data generation data.

Each on-vehicle device 50 transmits the tag data T to the data collection apparatus 1, and the data collection apparatus 1 stores the tag data T therein. In this case, the real data R is not transmitted to the data collection apparatus 1.

When the data user uses the user terminal 10 to connect to the data collection apparatus 1 in order to check a data collection state or collect real data R, information based on the tag data T collected from the data collection apparatus 1 is displayed on the user terminal 10. In this case, an operation screen for performing a data collection instruction operation based on the tag data T is displayed on the user terminal 10.

When the data user uses the user terminal 10 to perform an operation to designate real data R to be collected, instruction data that designates target real data R to each of target on-vehicle devices 50 is transmitted through the data collection apparatus 1.

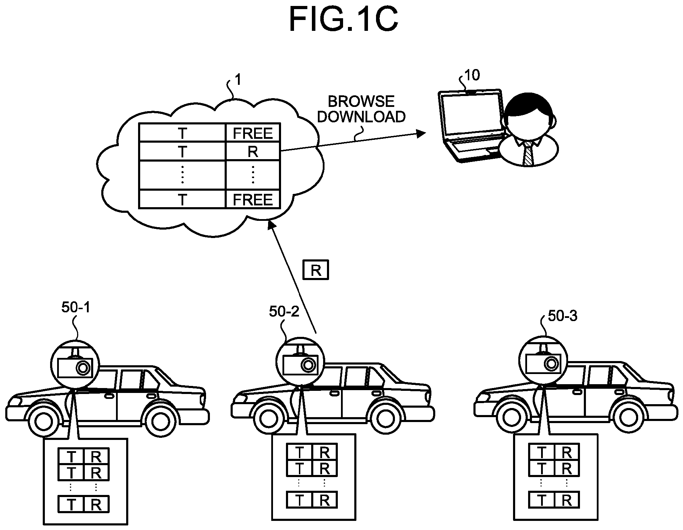

After that, as illustrated in FIG. 1C, real data R (such as image data) for which a collection instruction has been issued is transmitted from each on-vehicle device 50 to the data collection apparatus 1, and stored in the data collection apparatus 1. The data user uses the user terminal 10 to access the real data R stored in the data collection apparatus 1, and browses and downloads the real data R.

In terms of the data capacity in the on-vehicle device 50, it is preferred that real data R transmitted to the data collection apparatus 1 and corresponding tag data T be deleted from the on-vehicle device 50. It is preferred that the tag data T be tag data converted into metadata that can grasp the outline of real data R and determine the necessity of real data R by a data user rather than data obtained by simply extracting a part of acquired data.

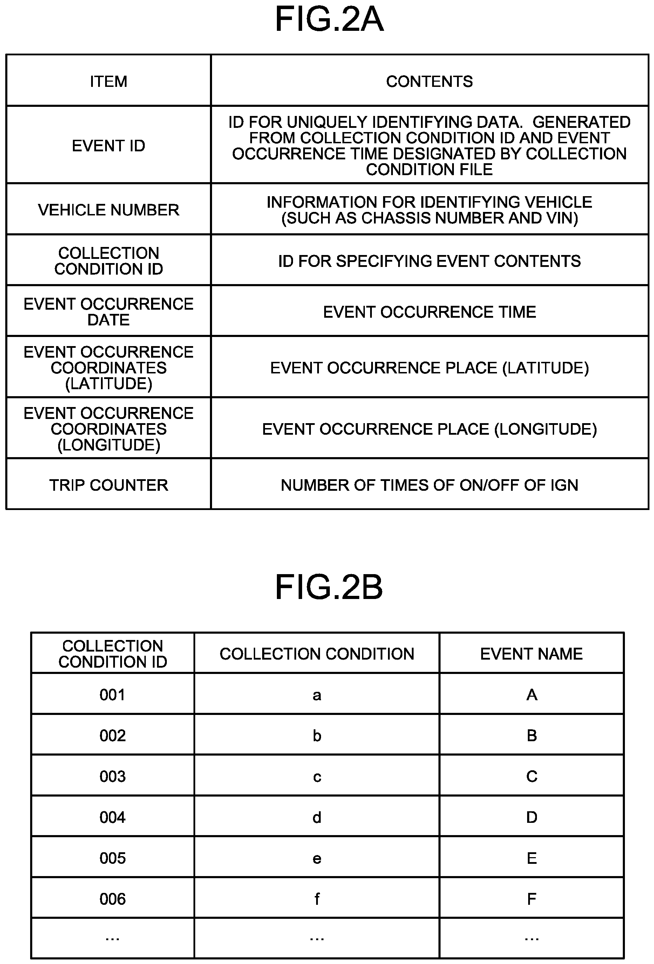

Next, a specific example of tag data T is described with reference to FIG. 2A and FIG. 2B. FIG. 2A is a diagram illustrating an example of tag data T. FIG. 2B is a diagram illustrating an example of a collection condition ID. In the example illustrated in FIG. 2A, the tag data T includes an event ID, a vehicle number, a collection condition ID, an event occurrence date, event occurrence coordinates (latitude, longitude), and a Trip counter.

The event ID is an identification code for uniquely identifying data, and is generated from the collection condition ID designated by the collection condition file and the event occurrence time. For example, when the collection condition ID is 001 and the order of occurrence is first, the event ID is "0010001". The vehicle number is an identification number of each vehicle, and the event occurrence date is data on the date when an event (state satisfying data collection condition) occurred. The event occurrence coordinates (latitude, longitude) are data on the position where an event occurred, and the Trip counter is the number of times of ON/OFF of an ignition switch (number of times of ON/OFF of engine from predetermined time point such as start of data collection).

The collection condition ID is data for identifying data collection conditions set to the on-vehicle device 50 that are associated with the collection condition data (file) as illustrated in FIG. 2B. Regarding the data collection condition, in the case where data is collected by a plurality of data users or data needs to be collected by a single data user under a plurality of different conditions, a plurality of data collection conditions are set to each on-vehicle device 50.

The common collection condition data is stored in each on-vehicle device 50 and the data collection apparatus 1. For an on-vehicle device 50 that is not a collection target under a given condition, data on the collection condition is not stored in a collection condition file stored in the on-vehicle device 50.

It is preferred that the collection condition data (file) have a simple data configuration including collection condition ID data for identifying a collection condition and collection condition data indicating contents of the collection condition, and an event name (used for display) be associated so as to facilitate the understanding of screen display by a data user.

In the example illustrated in FIG. 2B, an ID indicating a collection condition and its name are used as tag data T. A method in which real data R is categorized into data types depending on levels and the level data is used as tag data T and a method in which information categorized depending on levels such as collection condition achievement levels, such as inter-vehicle distance level from a preceding vehicle before occurrence of cut-in upon detection of a cut-in vehicle, serving as additional data for the data collection condition is used to determine the degree of danger (long inter-vehicle distance: low degree of cut-in danger, intermediate inter-vehicle distance: intermediate degree of cut-in danger, short inter-vehicle distance: high degree of cut-in danger) and the degree of danger is used as tag data T are preferred methods.

In the case where the above-mentioned system is formed by cloud, the above-mentioned on-vehicle device 50 tags collected data with information such as time, position, and speed, uploads only the tag data T to the cloud as meta information, and stores the data main body such as images in the on-vehicle device 50. When a data user such as a service developer wants to acquire needed data from the on-vehicle device 50, the data user refers to metadata collected on the cloud to specify a target vehicle, and the system extracts an image in which the vehicle is recorded, so that real data R is recovered.

In this manner, a large volume of image data is not needed to be stored on the cloud, and only lightweight tag data T can be managed and referenced to collect only needed real data R.

For example, in the development of automatic driving, developers need real data R on dangerous cut-in scenes. Various kinds of cut-in are expected to occur depending on ever-changing road environments. To address this, the data collection system according to the embodiment manages data by the tagging function, and can thus easily find only dangerous cut-in scenes.

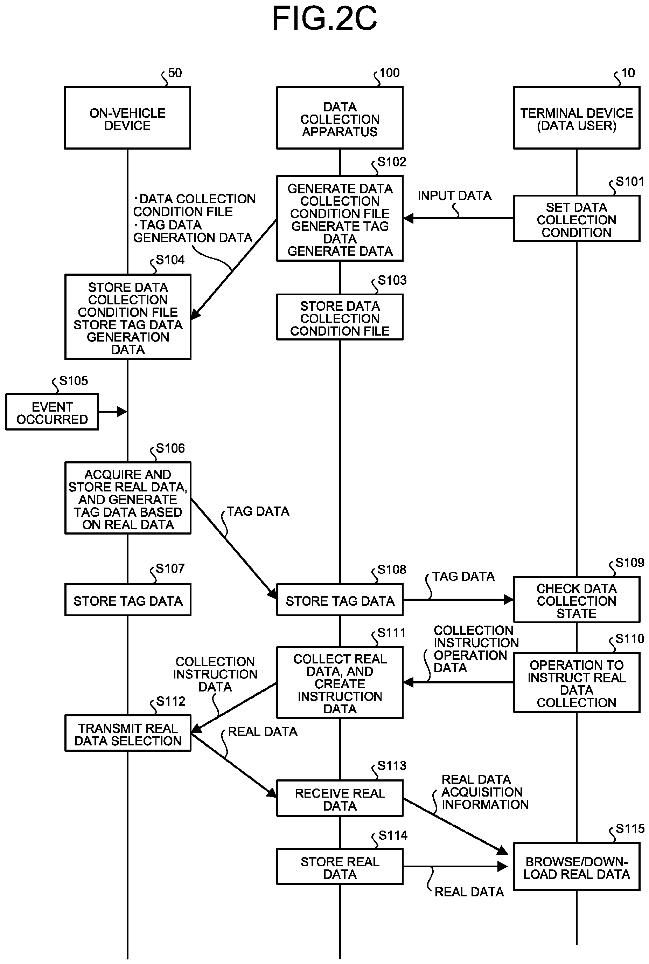

Next, the flow of processing and data in the constituent devices (the on-vehicle device 50, a data collection apparatus, and a terminal device (data user)) in the data collection system is described with reference to a processing and data transition diagram of FIG. 2C. FIG. 2C is a data transition diagram in the data collection system. Only one on-vehicle device 50 is illustrated, but all the on-vehicle devices 50 designated as data collection targets perform the same operation.

When a data user uses a user terminal 10 to input a data collection condition (Step S101), input data on the data collection condition is transmitted to the data collection apparatus 1. In this manner, the data collection apparatus 1 creates a data collection condition data file based on the input data on the data collection condition, and tag data generation data used to generate tag data T corresponding to real data based on the real data (Step S102).

The created data collection condition data file and the created tag data generation data are transmitted to the on-vehicle device 50, and the data collection condition data file is stored in the data collection apparatus 1 (Step S103). The on-vehicle device 50 stores therein the data collection condition data file and the tag data generation data transmitted from the data collection apparatus 1 (Step S104).

Subsequently, when an event matching the data collection condition included in the data collection condition data file has occurred (Step S105: determined based on output from each sensor in vehicle), the on-vehicle device 50 acquires data on collection targets (see data in data collection condition data file) from each sensor in the vehicle and stores the data therein, and generates tag data T based on real data (Step S106).

The on-vehicle device 50 stores the generated tag data T in the on-vehicle device 50 (Step S107). The generated tag data T is transmitted to the data collection apparatus 1, and the data collection apparatus 1 stores the transmitted tag data T therein (Step S108). The processing upon the occurrence of the event (processing at Step S105 to Step S108) is performed each time an event occurs.

The tag data T stored in the data collection apparatus 1 is provided to the user terminal 10 in response to an operation performed on the user terminal 10 by the data user, and a data collection state and an operation screen for collecting real data are displayed on the user terminal 10. In this manner, the data user can check the data collection state (Step S109).

In this case, when the data user performs an operation to instruct to collect needed real data R based on the tag data T (Step S110), collection instruction operation data is transmitted to the data collection apparatus 1, and the data collection apparatus 1 creates collection instruction data including real data identification data on the collection targets based on the collection instruction operation data (Step Sill). The collection instruction data is transmitted to the on-vehicle device 50.

The on-vehicle device 50 selects real data to be collected based on the received collection instruction data, and transmits the real data to the data collection apparatus 1 (Step S112).

Next, the data collection apparatus 1 receives real data R transmitted from the on-vehicle device 50 (Step S113), and transmits real data acquisition information indicating that the real data R has been acquired to the user terminal 10 and stores the received real data R therein (Step S114). The data user operates the user terminal 10 to access the real data R stored in the data collection apparatus 1, and browses and downloads the real data R (Step S115).

The data user can efficiently collect needed real data through the flow described above, and the data is processed, accumulated, and transmitted in the flow described above, and hence the data processing and memory load in each device and the load on data transmission among the devices can be suppressed.

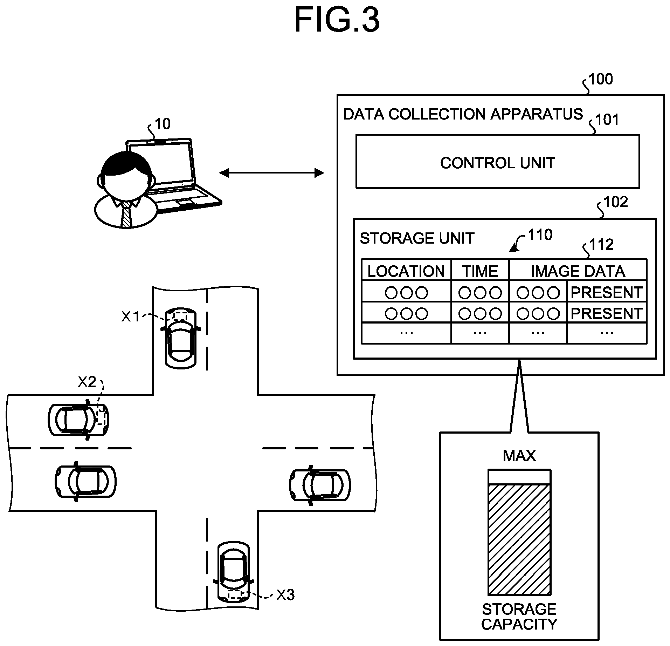

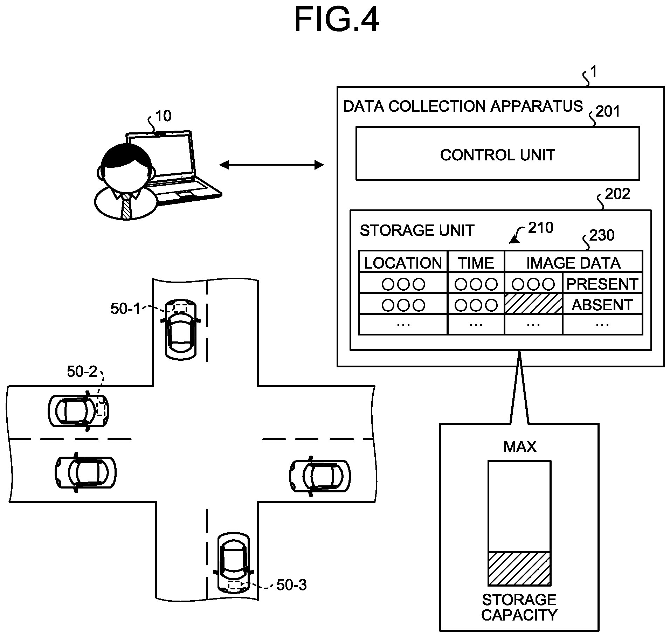

Next, a data collection example is described by taking map (road) data as an example of a specific data type. In the following, for easier understanding, a conventional data collection system is first described with reference to FIG. 3, and a data collection system in the present application is then described with reference to FIG. 4.

FIG. 3 is a diagram for describing the conventional technology. FIG. 4 is a diagram illustrating a collection example of data by the data collection apparatus according to the embodiment.

As illustrated in FIG. 3, in the conventional data collection system, each of on-vehicle devices X1, X2, ... transmits data acquired by in-vehicle sensors, such as position data, time data, and image data, to a data collection apparatus (server) 100 after adding needed additional data such as vehicle identification data. The data type to be acquired (what kind of data is to be acquired; data such as position, time, image, speed, vibration, and inclination) and the data acquisition range (road section, period) are set by a user in advance through a data collection apparatus 1, and each of the on-vehicle devices X1, X2, ... acquires the set data from the corresponding sensor.

In such a conventional data collection system, all pieces of image data in a designated section where the vehicle has travelled are transmitted to the data collection apparatus 100 such as cloud. Accordingly, for example, duplication of data on a road with large traffic is large, and a massive amount of real data more than needed is collected such that a large amount of collected data 110 is accumulated in a storage unit 102 in the data collection apparatus 100. Thus, the data volume is increased to cause a problem in that the storage capacity of the storage unit 102 in the data collection apparatus 100 is consumed. In particular, image data 112 has a large data volume, causing a large communication load and consumption of the storage capacity of the storage unit 102.

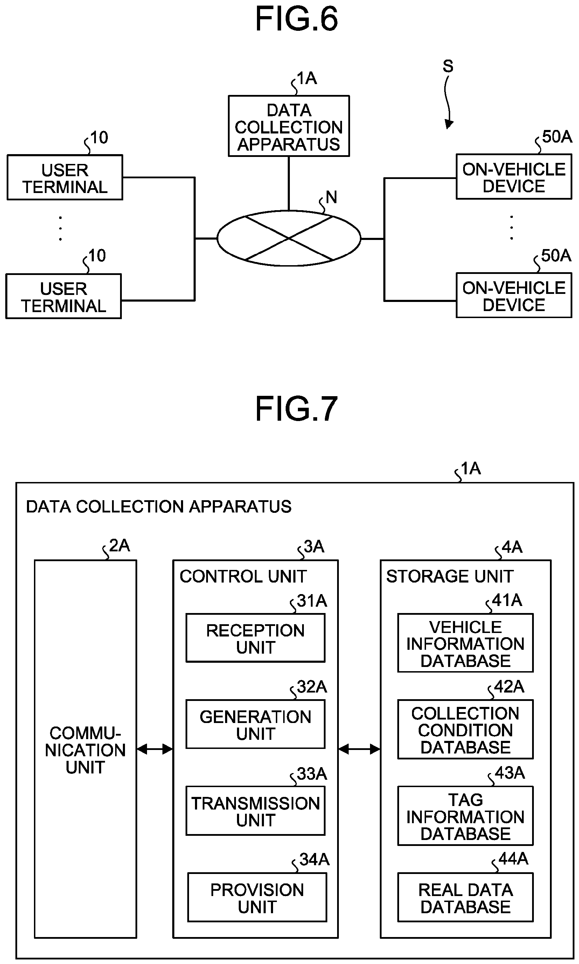

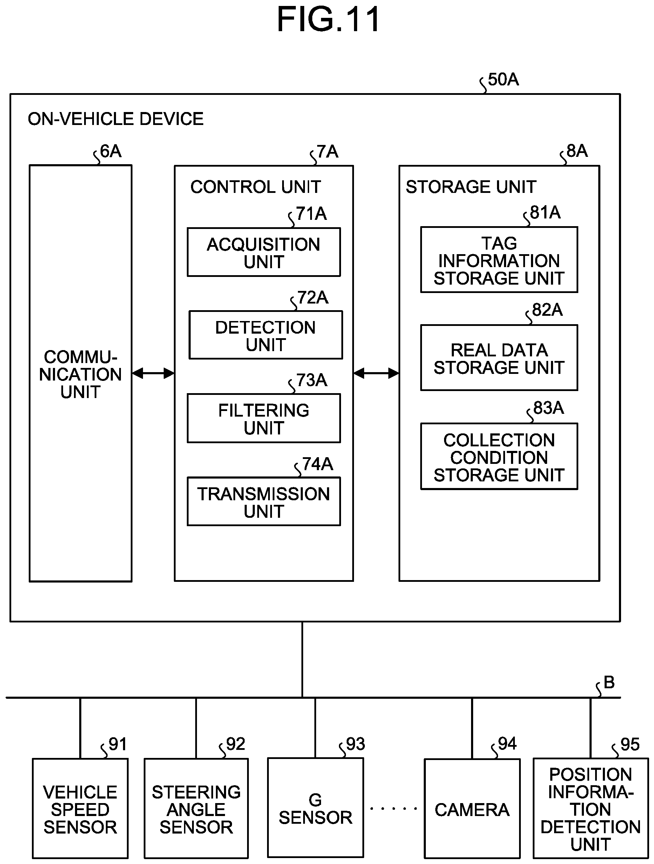

Examples of the embodiment addressing the problem include an embodiment illustrated in FIG. 4. Specific configuration examples of the data collection apparatus 1 are described later with reference to FIG. 7, FIG. 16, FIG. 20A, and FIG. 29. Specific configuration examples of the on-vehicle device 50 are described later with reference to FIG. 11, FIG. 16, and FIG. 20A.

As illustrated in FIG. 4, in a data collection system in the present embodiment, each of on-vehicle devices 50-1, 50-2, ... collects, for data acquired by an in-vehicle sensor such as position data, time data, and image data, real data R from each sensor based on the data collection condition designated from the data collection apparatus 1, and generates tag data T based on a tag data generation condition designated from the data collection apparatus 1.

The generated tag data T and corresponding real data R are accumulated in each of the on-vehicle devices 50-1, 50-2, ... (on-vehicle device that has generated tag data T). The data collection condition such as the data type and tag data generation condition information for generating tag data to be collected by the on-vehicle devices 50-1, 50-2, ... are generated by the data collection apparatus 1 based on an operation on a user terminal 10 by a data user, and stored in a storage unit 202 in the data collection apparatus 1. The tag data generation condition information is transmitted to data collection target on-vehicle devices 50-1, 50-2, ... and stored in the corresponding storage unit.

The tag data T generated by the on-vehicle device 50 is transmitted to the data collection apparatus 1, and the data collection apparatus 1 accumulates the tag data T therein. In this case, the real data R is not transmitted from the on-vehicle device 50 to the data collection apparatus 1.

When a data user such as a service developer wants to acquire needed data from the on-vehicle device 50, the data user references tag data T collected and accumulated in the data collection apparatus 1 by using the user terminal 10 communicably connected to the data collection apparatus 1 to specify a target vehicle, and performs a data collection instruction operation.

In response to the operation, the data collection apparatus 1 specifies vehicles having real data R to be collected based on accumulated tag data T, and transmits a transmission instruction for real data to be collected to on-vehicle devices 50-1, 50-2 ... in the vehicles. In this manner, the data collection apparatus 1 collects data by extracting target real data (such as image data 230) accumulated in the on-vehicle devices 50-1, 50-2 ....

On the user terminal 10, an operation screen for designating a data collection condition and performing a real data collection designation operation based on tag data T is generated and displayed by referencing the tag data T in the data collection apparatus 1.

Examples of the method for specifying a vehicle from which real data R is collected include, in addition to the method for specifying and designating a vehicle itself as described above, a method for designating a vehicle condition, such as a method for designating vehicle conditions of the vehicle type, traveling position (region), traveling time (time zone), and occurrence of a particular event, to collect real data R on the vehicle.

In this manner, a large volume of image data 230 is not needed to be stored in the data collection apparatus 1, and only lightweight tag data T can be managed and referenced to collect only needed image data. In other words, the consumption of the storage capacity of the storage unit 202 in the data collection apparatus 1 can be suppressed.

For example, in the development of automatic driving, developers need data on dangerous cut-in scenes. Various kinds of cut-in occur depending on ever-changing road environments. Data is managed by the tagging function, and hence the developers can find only dangerous cut-in scenes based on tag data T, and collect only corresponding image data.

For example, the time when the vehicle travelled and position information are transmitted to the data collection apparatus 1 as tag data T. When a developer requests image data on a road, the developer references the tag data T in the data collection apparatus 1 to specify a vehicle that has passed through the target road. The developer can acquire image data from the vehicle through the data collection apparatus 1.

In the future, the number of connected cars whose data is collected and provided to a center is expected to increase, and data to be collected from the cars is expected to be massive. By utilizing tag data T as in the present embodiment to efficiently collect only data matching the needs from data users such as service developers, the system can be utilized to various services.

The data volume of the tag data T is small, and hence all pieces of tag data T matching the data collection condition may be stored in the data collection apparatus 1. In the case where there is a large difference in traffic between road sections for which data collection has been designated, processing for thinning out the generation, transmission, and accumulation of tag data T in a road section having large traffic or processing for deleting old data when a proper collection amount is exceeded may be performed. In contrast, for a road section having very small traffic, processing for relaxing the data collection condition and collecting similar data by interpolation may be performed.

In this case, it is preferred that a data user take appropriate measures by notifying a data user of the fact or displaying information indicating the fact on an operation screen for instructing real data collection such that data can be selected.

Next, the outline of each technical feature in the above-mentioned embodiment is described.

Technical feature 1: data that can identify a lane section on a road is included as tag data (included in data collection condition). Consequently, data can be filtered based on the lane section.

Technical feature 2: in technical feature 1, the data collection apparatus instructs to collect real data such that the collected data amounts (counts) are equal among lane sections. In this manner, real data can be collected independently of the difference in traffic among lane sections, and waste real data collection caused by difference in data collection amount among lane sections can be prevented.

Technical feature 3: in technical feature 1, the data collection apparatus sets a data collection condition such that the collected data amounts (counts) are equal among lane sections. For example, a thinning-out condition that data is acquired once when a data collection condition is established o times is included in the data collection condition. In this manner, the amounts of real data acquired by the on-vehicle devices can be made constant independently of the difference in traffic among lane sections, waste real data collection caused by difference in data collection amount among lane sections can be prevented, and data processing, memory load, and data transmission load in the on-vehicle device can be reduced.

Technical feature 4: generated and stored tag data is converted into metadata. Consequently, a data user can easily grasp the data contents, and easily select real data to be collected.

Technical feature 5: in technical feature 4, items in the collection condition are converted into metadata. The collection condition is originally set by a data user, and hence by using metadata on the relation, a data user can more easily grasp the data contents, and easily select real data to be collected.

Technical feature 6: in technical features 4 and 5, level information on an item (such as collection condition) is also converted into metadata along with the conversion of the item into metadata. Detailed filtering based on the level of a given item can be performed, and more detailed selection of real data to be collected can be easily performed.

### First embodiment

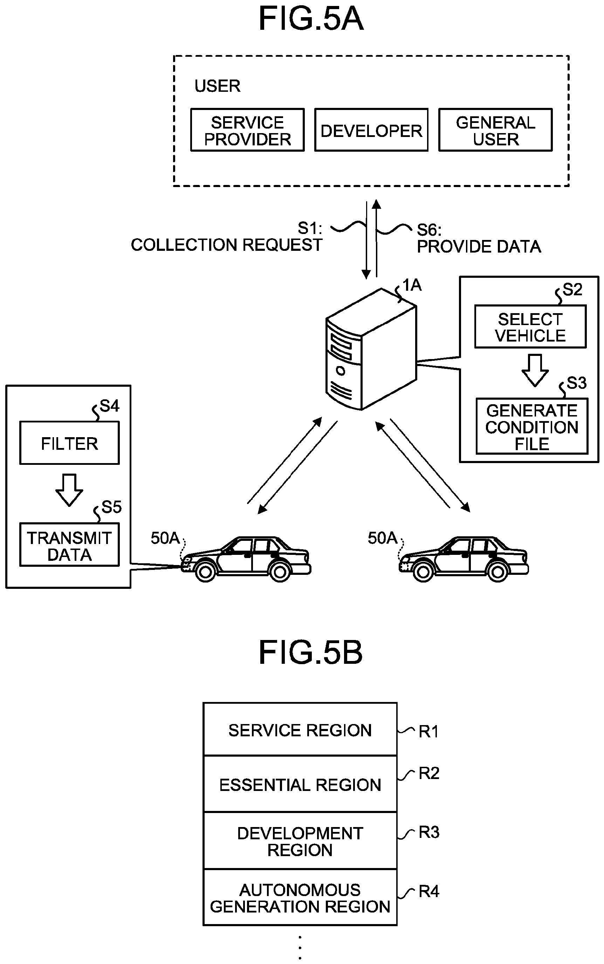

Subsequently, a data collection apparatus, a data collection system, and a data collection method according to a first embodiment are described. First, the outline of the data collection method according to the first embodiment is described with reference to FIG. 5A. FIG. 5A is a diagram illustrating the outline of the data collection method. The data collection method is implemented by communicating data between a data collection apparatus 1A and an on-vehicle device 50A illustrated in FIG. 5A.

The data collection apparatus 1A is a data collection server that receives a data collection request from a user of data, and collects real data R (vehicle acquisition data) from the on-vehicle device 50A based on the received collection request.

The data collection apparatus 1A provides collected data to each data user. In the example illustrated in FIG. 1A, the case where data users are a service provider, a developer, and a user is illustrated. In other words, the data collection apparatus 1A collects data desired by the users instead of the users, and provides the collected data to each data user.

Specifically, as illustrated in FIG. 5A, first, the data collection apparatus 1A receives a collection request from the data user (Step S1). The collection request includes a collection condition of data designated by each data user. The collection condition includes information on the data type and information on a collection target vehicle and position information.

Subsequently, the data collection apparatus 1A selects a vehicle satisfying the collection condition (Step S2). For example, the data collection apparatus 1A holds information on each vehicle as a database, and can select a vehicle satisfying the above-mentioned collection condition from the database.

Subsequently, the data collection apparatus 1A generates a condition file indicating a collection condition for each vehicle (Step S3). The condition file is a file divided depending on the use purpose of data. An example of the division of the condition file is described later with reference to FIG. 5B.

The data collection apparatus 1A transmits a condition file generated for each vehicle to the on-vehicle device 50A in each vehicle. Each on-vehicle device 50A filters data satisfying a collection condition indicated by the condition file (Step S4), and transmits the filtered data to the data collection apparatus 1A (Step S5).

Specifically, the data collection apparatus 1A sets a plurality of data collection conditions to the on-vehicle device 50A, and causes the on-vehicle device 50A to acquire data (tag data T) based on each data collection condition once. The data collection apparatus 1A can filter and collect the data acquired by the on-vehicle device 50A (data collection apparatus 1A uses data collection condition data to designate a collection target data type, and on-vehicle device 50A filters and transmits data in accordance with designation). After that, the data collection apparatus 1A provides data (metadata based on tag data T) collected from each on-vehicle device 50A to a data user (Step S6).

In this manner, the data collection apparatus 1A according to the embodiment can collect only data desired by a data user from each on-vehicle device 50A to suppress data communication volume transmitted from each on-vehicle device 50A.

Consequently, the data collection apparatus 1A according to the embodiment can quickly collect data desired by a data user from each on-vehicle device 50A. Thus, the data collection apparatus 1A according to the embodiment can quickly provide data.

Subsequently, an example of the division of a condition file is described with reference to FIG. 5B. FIG. 5B is a diagram illustrating an example of the division of a condition file. As illustrated in FIG. 5B, the condition file is divided into a plurality of regions, and, for example, collection conditions for data for different uses are stored in the regions in the condition file. In the example illustrated in FIG. 5B, the condition file is divided into a service region R1, an essential region R2, a development region R3, and an autonomous generation region R4. In other words, the regions are made different for the purpose of distinguishing the processing form of acquired data (such as changing processing form depending on use purpose), such as different necessity and priority of data transmission.

The service region R1 is a region where collection conditions for service provided to general users by a service provider who provides service for general users or an administrator of the data collection apparatus 1A are stored. In the service region R1, collection conditions set by the service provider or the data collection apparatus 1A are distributed.

The essential region R2 is a region where collection conditions that when a collection condition is satisfied, data satisfying the collection condition needs to be transmitted. For example, in the essential region R2, collection conditions set by emergency vehicles such as an ambulance and a police car are distributed.

The development region R3 is a region where collection requests from a developer of the vehicle are stored. In the development region R3, collection conditions set by a developer are distributed.

The autonomous generation region R4 is a region where collection conditions autonomously generated by the on-vehicle device 50A itself are stored. For example, when abnormality in the vehicle is detected, the on-vehicle device 50A can generate a collection condition for data on a phenomenon similar to the abnormality, and store the collection condition in the autonomous generation region R4. Such a collection condition is generated on the on-vehicle device 50A side, and is thus distributed to the autonomous generation region R4 by the on-vehicle device 50A.

Data collected based on a collection condition in the service region R1 is finally provided to a general user, and data collected based on a collection condition in the essential region R2 is finally provided to an emergency vehicle.

Data collected based on a collection condition in the development region R3 is finally provided to a developer, and data collected based on a collection condition in the autonomous generation region R4 is finally provided to the on-vehicle device 50A or a developer.

In other words, in the service region R1, the essential region R2, the development region R3, and the autonomous generation region R4, collection conditions for data for different uses are stored.

In particular, as a collection condition in the essential region R2, which relates to human life, a collection condition for emergency data is stored. Thus, data under the collection condition in the essential region R2 is collected without approval of the user. On the other hand, data under collection conditions in the other regions (in particular, service region R1) is collected with approval of the user.

In this manner, the data collection apparatus 1A generates a condition file by distributing collection conditions to regions where the collection conditions are stored depending on the use purposes of the collection conditions. Consequently, data corresponding to the collection condition can be appropriately collected. By providing the essential region R2, data with high emergency can be reliably collected.

In the collection condition file, a processing type may be added to a collection condition and stored. In this case, the data collection apparatus 1A can receive vehicle acquisition data from the vehicle by an acquisition method corresponding to the processing type.

Next, the configuration of the data collection system according to the embodiment is described with reference to FIG. 6. FIG. 6 is a diagram illustrating a configuration example of the data collection system. As illustrated in FIG. 6, a data collection system S includes a data collection apparatus 1A, a plurality of user terminals 10, and a plurality of on-vehicle devices 50A.

The data collection apparatus 1A, the user terminals 10, and the on-vehicle devices 50A are connected through a network N. The data collection apparatus 1A collects data from each on-vehicle device 50A based on a collection request received from the user terminal 10, and provides the data to the user terminal 10.

The user terminal 10 is a terminal operated by a user, for example, a mobile phone such as a smartphone, a tablet terminal, a PDA, a tablet PC, and a notebook PC. The user terminal 10 includes a computer having a central processing unit (CPU), a read only memory (ROM), a random access memory (RAM), a hard disk drive (HDD), and an input/output port, and various kinds of circuits.

The user can operate the user terminal 10 to transmit the above-mentioned collection request to the data collection apparatus 1A. The user terminal 10 can present data provided from the data collection apparatus 1A to the user. The on-vehicle device 50A can be used as the user terminal 10.

The on-vehicle device 50A is a communication device mounted on each vehicle. The on-vehicle device 50A stores data designated by the filtering request in an internal storage medium together with traveling information on the vehicle, and transmits the data to the data collection apparatus 1A based on a transmission request transmitted from the data collection apparatus 1A.

Next, a configuration example of the data collection apparatus 1A according to the embodiment is described with reference to FIG. 7. FIG. 7 is a block diagram of the data collection apparatus 1A. As illustrated in FIG. 7, the data collection apparatus 1A includes a communication unit 2A, a control unit 3A, and a storage unit 4A.

The communication unit 2A is a communication interface for transmitting and receiving information to and from the network N. The control unit 3A can transmit and receive various kinds of information to and from the units through the communication unit 2A and the network N.

The control unit 3A includes a reception unit 31A, a generation unit 32A, a transmission unit 33A, and a providing unit 34A. For example, the control unit 3A includes a computer having a central processing unit (CPU), a read only memory (ROM), a random access memory (RAM), a hard disk drive (HDD), and an input/output port, and various kinds of circuits.

For example, the CPU in the computer reads and executes a computer program stored in the ROM to function as the reception unit 31A, the generation unit 32A, the transmission unit 33A, and the providing unit 34A in the control unit 3A.

At least a part or whole of the reception unit 31A, the generation unit 32A, the transmission unit 33A, and the providing unit 34A in the control unit 3A may be configured by hardware such as an application specific integrated circuit (ASIC) and a field programmable gate array (FPGA).

For example, the storage unit 4A corresponds to a RAM or an HDD. The RAM or the HDD includes a vehicle information database 41A, a collection condition database 42A, a tag data database 43A, and a real data database 44A. The data collection apparatus 1A may acquire the above-mentioned computer program and various kinds of information through another computer connected by a wired or wireless network or a portable recording medium.

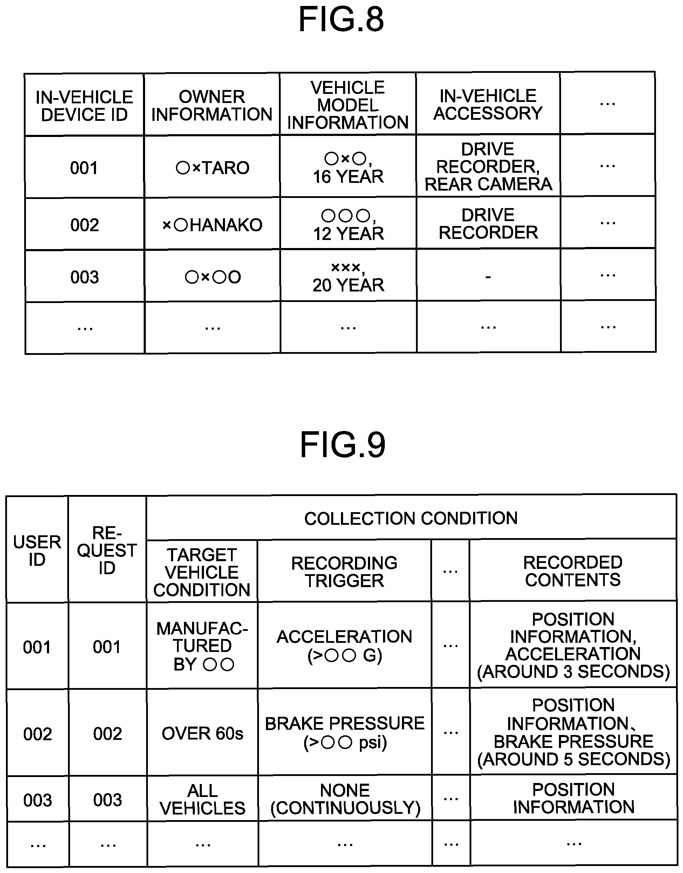

The vehicle information database 41A has a vehicle information table related to each vehicle. FIG. 8 is a diagram illustrating an example of a vehicle information table 41. As illustrated in FIG. 8, the vehicle information table is information in which "on-vehicle device ID", "owner information", "vehicle type information", and "in-vehicle accessories" are associated with one another.

The "on-vehicle device ID" is an identifier for identifying each on-vehicle device 50A. The "owner information" is information on an owner of a vehicle on which the on-vehicle device 50A is mounted. In the example illustrated in FIG. 8, the name of an owner is indicated as owner information, but the sex, age, address, and occupation of the owner may be included in the owner information.

The "vehicle type information" is information on the type of vehicle, and is information on the vehicle type name and model year. The "in-vehicle accessories" are information on accessories in the vehicle. For example, information indicating the presence/absence of a camera and the type of a camera is included in the vehicle information.

Referring back to FIG. 7, the collection condition database 42A is described. The collection condition database 42A has a collection condition table related to collection conditions received from the user terminal 10. FIG. 9 is a diagram illustrating an example of the collection condition table.

As illustrated in FIG. 9, a collection condition table 42a is information in which "user ID", "request ID", and "collection condition" are associated with one another. The "user ID" is an identifier for identifying a user.

The "request ID" is an identifier for identifying a collection request. The "collection condition" is information indicating a collection condition of real data. Examples of the collection condition include "target vehicle condition", "recording trigger", and "collected contents".

The "target vehicle condition" indicates a condition for a collection target vehicle, and the "recording trigger" indicates a trigger to start recording real data by the on-vehicle device 50A. The "recorded contents" are information indicating real data to be recorded in the on-vehicle device 50A.

The example illustrated in FIG. 9 indicates the case where a target vehicle for a request ID "001" is a vehicle "manufactured by company ∘∘", a recording trigger is acceleration (> oo G), and collected contents are position information and acceleration (for 3 seconds around).

In this case, when an acceleration of more than oo G has been detected, the on-vehicle device 50A records acceleration data for 3 seconds before and after a time point at which the acceleration exceeded oo G together with position information.

The example illustrated in FIG. 9 indicates the case where a target vehicle for a request ID "002" is a user of 60s or higher, a recording trigger is a brake pressure (> oo psi), and a time point at which the acceleration exceeded oo psi is a reference (for 5 seconds around).

In this case, when a brake pressure of more than oo psi has been detected, the on-vehicle device 50A records brake pressure data for 5 seconds before and after a time point at which the acceleration exceeded oo G together with position information.

As indicated by a request ID "003", target vehicles may be all vehicles. As indicated by the request ID "003", no recording trigger may be set such that recording is performed all the time.

Referring back to FIG. 7, the tag data database 43A is described. The tag data database 43A is a database that stores therein tag data transmitted from each on-vehicle device 50A. For example, in the tag data database 43A, information on time, a tag data ID, and an on-vehicle device ID may be added to tag data for each request ID and stored. The tag data database 43A is an example of a tag data storage unit.

The real data database 44A is a database that stores therein real data collected from each on-vehicle device 50A based on tag data. Information stored in the tag data database 43A and the real data database 44A is appropriately provided to a user by a providing unit 35A.

Subsequently, each configuration in the control unit 3A is described. The reception unit 31A in the control unit 3A receives, from a user terminal 10, a collection request including a collection condition of data to be collected. When the reception unit 31A receives the collection condition, the reception unit 31A adds the above-mentioned request ID to the collection condition, and registers the collection condition in the collection condition database 42A.

When the reception unit 31A receives a collection request from an administrator of an emergency vehicle, the reception unit 31A notifies the generation unit 32A of the collection request. The collection request includes position information such as an accident site. In the following, in order to distinguish between a collection request for an emergency vehicle and other collection requests, the collection request for an emergency vehicle is sometimes referred to as "collection appeal".

The reception unit 31A functions as a tag data acquisition unit. The reception unit 31A can receive tag update information on tag data from the on-vehicle device 50A, and update stored contents in the tag data database 43A with the received tag update information to synchronize the tag data stored in the on-vehicle device 50A and tag data stored in the tag data database 43A.

The reception unit 31A functions as an acquired data collection unit that receives data satisfying a collection condition transmitted from each vehicle. When the reception unit 31A receives acquired data from the on-vehicle device 50A, the reception unit 31A registers corresponding real data in the real data database 44A. The reception unit 31A serves as an acquired data collection unit that filters and collects acquired data for each collection condition stored in the condition file.

The generation unit 32A functions as a collection condition data generation unit and a collection condition setting unit. The generation unit 32A generates collection condition data indicating a collection condition of data based on a collection request received by the reception unit 31A.

The collection condition data is data designating the above-mentioned recording trigger, data type and format (photographed image data (such as moving image, still image, and so on, and voice data)), and data acquisition position condition. In other words, when an event corresponding to a recording trigger designated by collection condition data has been detected, the on-vehicle device 50A can store therein data designated by the collection condition data.

After the generation unit 32A generates the collection condition data, the generation unit 32A transmits the collection condition data to each vehicle through the transmission unit 33A, and sets the collection condition data to each vehicle. In this case, as illustrated in FIG. 5B, the generation unit 32A can transmit collection condition data by designating a region in the collection condition file.

The transmission unit 33A transmits the collection condition data generated by the generation unit 32A to the on-vehicle device 50A, and transmits a transmission request for real data to each on-vehicle device 50A. Specifically, the transmission unit 33A functions as an acquisition data transmission instruction unit that generates transmission instruction data for vehicle acquisition data based on tag data, and transmits the transmission instruction data to the vehicle.

An in-vehicle camera such as a drive recorder is generally fixedly mounted to a vehicle. Thus, it may be difficult for some in-vehicle cameras to obtain video data with a desired field angle. In other words, a drive recorder may be unable to image an accident site.

In view of the above, the transmission unit 33A can request connection to a terminal having a camera such as a smartphone owned by a user of the vehicle through the on-vehicle device 50A. Specifically, the transmission unit 33A can transmit a transmission request while adding a connection request for the terminal.

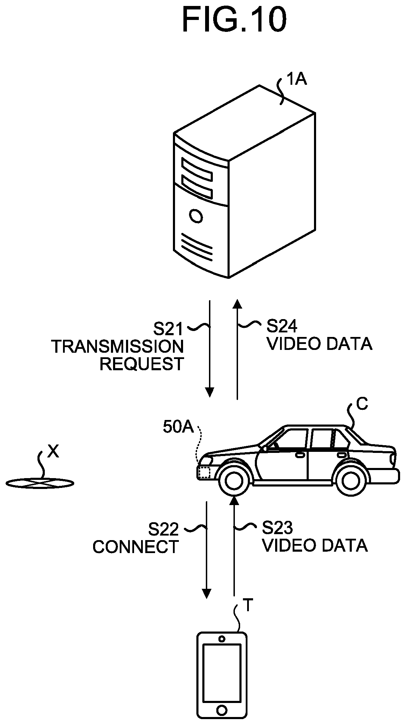

FIG. 10 is a diagram illustrating an example of the connection request. As illustrated in FIG. 10, the data collection apparatus 1A transmits a transmission request for video data at an accident site X to the on-vehicle device 50A (Step S21). In response to the transmission request, the on-vehicle device 50A connects to a terminal T capable of taking video data (Step S22).

For example, the connection request includes an activation signal for activating a near-field communication device such as wi-fi (registered trademark) included in the on-vehicle device 50A. The on-vehicle device 50A can activate the near-field communication device based on the activation signal.

The on-vehicle device 50A can connect to the terminal T through the near-field communication device. The on-vehicle device 50A transmits a request to take images of the accident site X to the terminal T, and acquires video data in which the accident site X is imaged from the terminal T (Step S23). In other words, the terminal T, which can freely take images at a desired field angle by a user, can appropriately take video data on the accident site X.

After that, the on-vehicle device 50A transmits the video data to the data collection apparatus 1A, so that the data collection apparatus 1A can collect video data on the accident site (Step S24).

In this manner, the data collection apparatus 1A collects image data from the terminal T through the on-vehicle device 50A, thereby being capable of collecting video data in which an accident site X is appropriately imaged. In this case, the terminal T to be connected to the on-vehicle device 50A may be a terminal owned by a user of the on-vehicle device 50A, or may be a terminal owned by a person (for example, passersby and curious bystanders) other than the user.

Referring back to FIG. 7, the providing unit 34A is described. The providing unit 34A provides tag data and real data to each user. For example, when a user is an administrator of an emergency vehicle, the providing unit 34A maps tag data on a map, and displays the tag data on a user terminal 10 in the emergency vehicle.

The administrator can designate real data to be collected based on the tag data displayed on the user terminal 10. In this manner, the above-mentioned transmission unit 33A transmits a request to transmit real data corresponding to tag data in question, and the reception unit 31A collects the real data from the on-vehicle device 50A.

After that, the providing unit 34A can provide the collected real data to the user terminal 10 in the emergency vehicle. In this manner, an occupant (for example, fire crew or police officer) in the emergency vehicle can check the situation at an accident site X on the way to the accident site X. Consequently, quick and appropriate rescue effort can be made.

The providing unit 34A can provide other users with data collected based on the collection conditions designated by the users.

Next, a configuration example of the on-vehicle device 50A is described with reference to FIG. 11. FIG. 11 is a block diagram of the on-vehicle device 50A. In FIG. 11, a vehicle speed sensor 91 that detects vehicle speed of a vehicle, a steering angle sensor 92 that detects a steering angle of the vehicle, a G sensor 93 that detects acceleration of the vehicle, a camera 94 that takes an image of the periphery of the vehicle, and a position detection device 95 that detects the position of the vehicle are collectively illustrated.

The vehicle speed sensor 91, the steering angle sensor 92, the G sensor 93, the camera 94, and the position detection device 95 are connected to the on-vehicle device 50A through an in-vehicle network B such as CAN communication.

The on-vehicle device 50A includes a communication unit 6A, a control unit 7A, and a storage unit 8A. The communication unit 6A is a communication interface that transmits and receives information to and from the network N. The control unit 7A can transmit and receive various kinds of information to and from the units through the communication unit 2A and the network N.

The control unit 7A includes an acquisition unit 71A, a detection unit 72A, a filtering unit 73A, and a transmission unit 74A. For example, the control unit 7A includes a computer having a central processing unit (CPU), a read only memory (ROM), a random access memory (RAM), a hard disk drive (HDD), and an input/output port, and various kinds of circuits.

For example, the CPU in the computer reads and executes a computer program stored in the ROM to function as the acquisition unit 71A, the detection unit 72A, the filtering unit 73A, and the transmission unit 74A in the control unit 7A.

At least a part or whole of the acquisition unit 71A, the detection unit 72A, the filtering unit 73A, and the transmission unit 74A in the control unit 7A may be configured by hardware such as an application specific integrated circuit (ASIC) and a field programmable gate array (FPGA).

For example, the storage unit 8A corresponds to a RAM or an HDD. The RAM or the HDD includes a tag data storage unit 81A, a real data storage unit 82A, and a collection condition storage unit 83A. The on-vehicle device 50A may acquire the above-mentioned computer program and various kinds of information through another computer connected by a wired or wireless network or a portable recording medium.

The tag data storage unit 81A is described. Tag data is data having a role as index data of corresponding real data, and is information used by a user or the like to determine the necessity of checking the real data.

Specific examples of the tag data include date data on a trigger (time when collection condition is established), position data, data size of real data, and value level of cause of trigger occurrence (for example, when acceleration value is trigger, levels of acceleration value (less than threshold, twice threshold or less, third times of threshold or less)). The tag data is generated based on real data. The tag data can be generated by processing using predetermined calculation expressions of detection values (rounding of significant digits is performed if needed) for date data and position data and detections values for level values or processing using table data on detection values. The thus generated tag data is stored in the tag data storage unit 81A.

The volume of the tag data is smaller than that of real data, and hence the problem of storage capacity is not severe. The necessity of tag data is eliminated (reduced) along with deletion of real data, and hence the tag data may be deleted in synchronization with real data when the storage capacity is insufficient.

The tag data is used for filtering and searching of real data by the user, and hence it is important to acquire the tag data in real time. Thus, when tag data is generated, the tag data is promptly (immediately when communication is ready) transmitted to the data collection apparatus 1A.

Furthermore, tag data stored in the on-vehicle device 50A and tag data stored in the data collection apparatus 1A need to be the same data, and hence when tag data is updated (newly generated, deleted) on the on-vehicle device 50A side, such information needs to be promptly transmitted to the data collection apparatus 1A such that tag data on the data collection apparatus 1A is updated in synchronization. In the case where tag data is deleted on the data collection apparatus 1A, tag data and corresponding real data on the on-vehicle device 50A side may be deleted if the capacity of a storage device is insufficient.

The real data storage unit 82A is a storage unit that stores therein real data of a collection target type satisfying a collection condition (target real data). In the real data storage unit 82A, real data and tag data are stored in association with each other. For example, the real data storage unit 82A is a ring buffer storage medium, in which older real data is sequentially overwritten with new data.

The collection condition storage unit 83A is divided into a plurality of regions as illustrated in FIG. 5B. In each region in the collection condition storage unit 83A, designated collection condition data is stored.

The acquisition unit 71A in the control unit 7A is described. The acquisition unit 71A acquires a collection condition and a collection request from the data collection apparatus 1A. The acquisition unit 71A uses the acquired collection condition to update the collection condition storage unit 83A in a storage unit 8. In this manner, the collection condition storage unit 83A in the storage unit 8A can be updated to the latest version (synchronized with collection condition stored in data collection apparatus 1A).

The detection unit 72A detects an event satisfying the collection condition stored in the collection condition storage unit 83A. When the detection unit 72A detects an event satisfying the collection condition stored in the collection condition storage unit 83A, the detection unit 72A generates tag data based on real data on the event satisfying the collection condition, and notifies the filtering unit 73A and the transmission unit 74A of the tag data.

For example, when the detection unit 72A detects abnormality in the vehicle, the detection unit 72A generates a collection condition based on the abnormality and stores the collection condition in the autonomous generation region R4 (see FIG. 5B), and can request the data collection apparatus 1A to analyze the abnormality through the transmission unit 74A.

The filtering unit 73A stores the tag data notified from the detection unit 72A in the real data storage unit 82A in association with real data satisfying the collection condition. In other words, the filtering unit 73A filters real data satisfying the collection condition, and stores the real data in the real data storage unit 82A.

When a transmission request is transmitted from the data collection apparatus 1A, the filtering unit 73A can filter, based on the transmission request, real data designated by the transmission request (real data designated by user based on tag data on data collection apparatus 1A side) from the real data storage unit 82A, and notify the transmission unit 74A of the real data.

The transmission unit 74A transmits the tag data generated by the detection unit 72A to the data collection apparatus 1A, and transmits the real data filtered by the filtering unit 73A to the data collection apparatus 1A.

In this manner, the data collection apparatus 1A can provide each user with real data desired by each user and tag data corresponding to the real data.

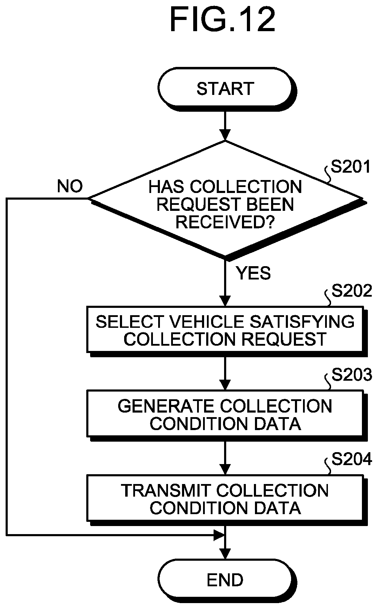

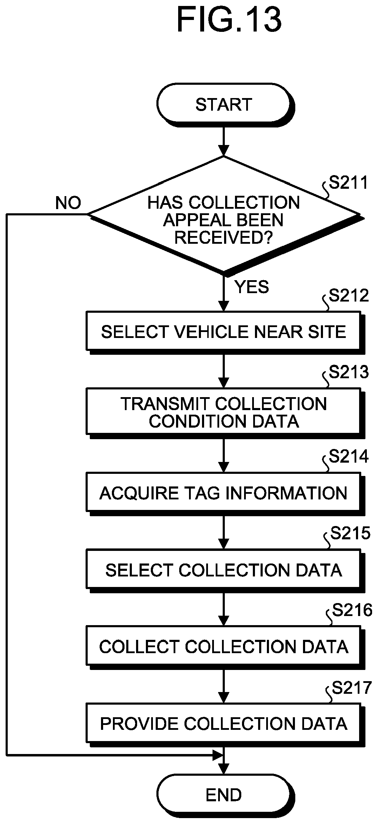

Next, procedures of processing executed by the data collection apparatus 1A according to the embodiment are described with reference to FIG. 12 and FIG. 13. FIG. 12 and FIG. 13 are flowcharts illustrating the procedures of the processing executed by the data collection apparatus 1A according to the embodiment. Referring to FIG. 12, processing related to generation of a collection file is described. Referring to FIG. 13, processing executed when a collection request is received from an emergency vehicle is described. These pieces of processing are repeatedly executed while the data collection apparatus 1A is in operation.

First, as illustrated in FIG. 12, the data collection apparatus 1A determines whether a collection request has been received (Step S201). When the collection request has been received (Yes at Step S101), the data collection apparatus 1A selects a vehicle satisfying a collection condition (Step S202).

Subsequently, the data collection apparatus 1A generates collection condition data addressed to the vehicle selected at Step S202 (Step S203), designates a region in the collection condition file in the on-vehicle device 50A to transmit collection condition data (Step S204), and finishes the processing. On the other hand, when a new collection condition has not been received (No at Step S201), the data collection apparatus 1A directly finishes the processing.

The collection condition data is transmitted in response to a collection condition file and an instruction command. The collection condition file includes a new collection condition file and a change collection condition file, and an update instruction command indicates new registration or change of the files, and a deletion instruction command indicates a file to be deleted. The data collection apparatus 1A grasps collection condition file information from the past transmission history of a target vehicle, and hence can respond by a method for replacing all collection condition files in the target vehicle (all new collection condition files are generated and transmitted together with update instruction).

Next, processing by the data collection apparatus 1A when a collection request is received from an emergency vehicle is described with reference to FIG. 13.

As illustrated in FIG. 13, the data collection apparatus 1A determines whether a collection request has been received from an emergency vehicle (Step S211). When the collection request has been received (Yes at Step S211), the data collection apparatus 1A selects a vehicle near a site (Step S212), and transmits collection condition data for acquiring image data at the site (Step S213).

Subsequently, the data collection apparatus 1A acquires tag data transmitted from the on-vehicle device 50A to which the collection condition data has been transmitted (Step S214), and selects data to be collected (Step S215). Regarding the processing at Step S215, data to be collected may be selected on the data collection apparatus 1A side by selection by a user or selection by presetting conditions.

Subsequently, the data collection apparatus 1A transmits a data collection request to a target vehicle to collect data from the on-vehicle device in the vehicle (Step S216). The data collection apparatus 1A provides the collected data to the emergency vehicle (Step S217), and finishes the processing. When the collection request has not been received (No at Step S211), the data collection apparatus 1A finishes the processing.

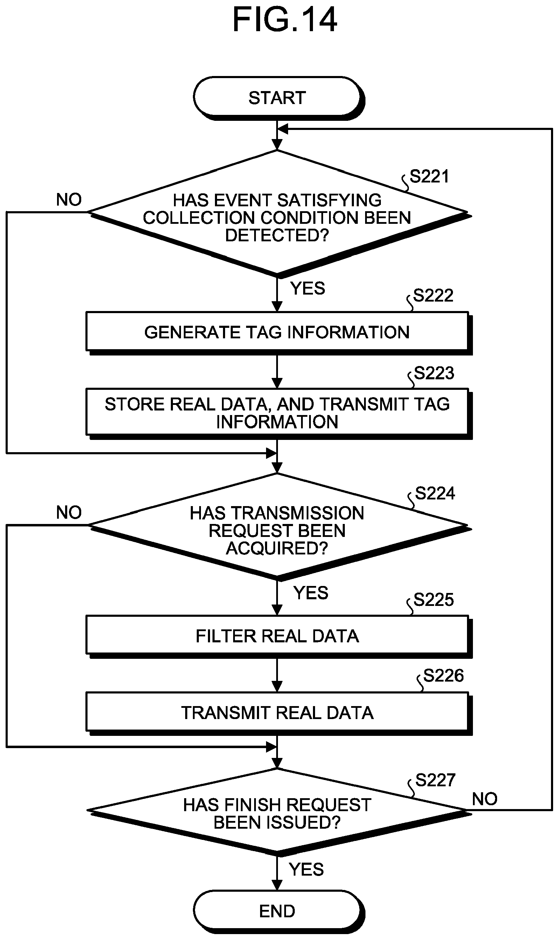

Subsequently, a procedure of processing executed by the on-vehicle device 50A is described with reference to FIG. 14. FIG. 14 is a flowchart illustrating the procedure of the processing executed by the on-vehicle device 50A. This processing is executed when a data collection request is issued by the data collection apparatus 1A.

As illustrated in FIG. 14, first, the on-vehicle device 50A determines whether an event satisfying a collection condition has been detected (Step S221). When the event has been detected (Yes at Step S221), the on-vehicle device 50A generates tag data designated by a collection condition file (Step S222). When the event has not been detected in the processing at Step S221 (No at Step S221), the on-vehicle device 50A proceeds to processing at Step S224.

In regard to a collection condition to be detected, when an event satisfying a collection condition among all collection conditions registered in the on-vehicle device 50A has been detected, processing for generating tag data and storing real data is performed for the collection condition.

Subsequently, the on-vehicle device 50A stores real data corresponding to the tag data therein and transmits the tag data (Step S223), and determines whether a transmission request has been acquired from the data collection apparatus 1A (Step S224).

When the transmission request has been acquired (Yes at Step S224), the on-vehicle device 50A filters real data to be transmitted (Step S225). Subsequently, the on-vehicle device 50A transmits the filtered real data to the data collection apparatus 1A (Step S226), and determines whether a finish request to finish the collection of real data has been issued (Step S227). Examples of the finish request include an update of the collection condition file.

When the finish request has been issued (Yes at Step S227), the on-vehicle device 50A finishes the processing. When the finish request has not been issued (No at Step S227), the on-vehicle device 50A proceeds to the processing at Step S221.

When the transmission request has not been acquired (No at Step S224), the on-vehicle device 50A proceeds to the processing at Step S227.

As described above, the data collection apparatus 1A according to the embodiment includes: the reception unit 31A, the collection condition data generation unit, the collection condition setting unit, and the acquired data collection unit. The reception unit 31A receives a collection request data obtained by each vehicle. The generation unit 32A (example of collection condition data generation unit) generates collection condition data indicating a data collection condition based on the collection request received by the reception unit 31A.

The generation unit 32A (example of collection condition setting unit) transmits the collection condition data generated by the collection condition data generation unit to each vehicle, and sets the collection condition data to each vehicle. The reception unit 31A (example of acquired data collection unit) receives data satisfying a collection condition transmitted from each vehicle. The generation unit 32A can set a plurality of collection conditions, and filters the plurality of collection conditions to collect data to be acquired.

In the data collection apparatus 1A according to the embodiment, the generation unit 32A (example of collection condition setting unit) divides and stores the collection condition data in a condition file, and transmits the condition file to the on-vehicle device 50 in each vehicle, and the reception unit 31A (example of acquired data collection unit) filters and collects data based on the collection conditions stored in the condition file.

In the data collection apparatus 1A according to the embodiment, the condition file has at least the essential region R4 where collection conditions indicating that data needs to be collected are distributed, and the generation unit 32A (example of collection condition setting unit) distributes collection condition data from an administrator of an emergency vehicle to the essential region R4.

In the data collection apparatus 1A according to the embodiment, the condition file indicates a collection condition of tag data on data, and the data collection apparatus 1A includes the transmission unit 33A that selects, based on tag data collected based on the condition file, a vehicle from which data is to be collected, and transmits a transmission request of data to the on-vehicle device 50 in the vehicle.

In the data collection apparatus 1A according to the embodiment, when a data type designated by the collection condition is image data, the transmission unit 33A transmits a request to connect to a terminal device T having an imaging device to the on-vehicle device 50.

The data collection system S according to the embodiment includes the data collection apparatus 1A and the on-vehicle device 50A.

### Second embodiment

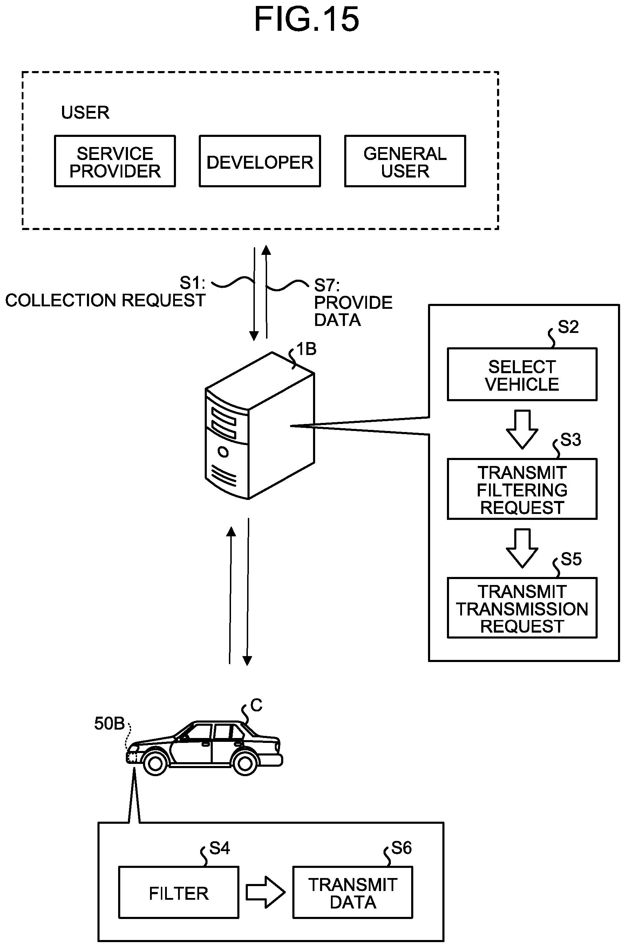

Subsequently, a data collection apparatus, a data collection system, and a data collection method according to a second embodiment are described. First, the outline of the data collection method according to the second embodiment is described with reference to FIG. 15. FIG. 15 is a diagram illustrating the outline of the data collection method. The data collection method is implemented by communicating data between a data collection apparatus 1B and an on-vehicle device 50B illustrated in FIG. 15.

The data collection apparatus 1B is a data collection server that receives a data collection request from a user of data, and collects data from the on-vehicle device 50B based on the received collection request.

The data collection apparatus 1B provides collected data to each user. In the example illustrated in FIG. 15, the case where users are a service provider, a developer, and a user is illustrated. Specifically, the data collection apparatus 1B collects data desired by the users instead of the users, and provides the collected data.

Specifically, as illustrated in FIG. 15, the data collection apparatus 1B first receives a collection request from a user (Step S1). Such a collection request includes a collection condition designated by each user. The collection condition includes information on the data type and information on a collection target vehicle. As the collection condition, a collection period, an upper limit of collection amount, and a collection region may be included.

Subsequently, the data collection apparatus 1B selects a vehicle C satisfying the collection condition (Step S2). For example, the data collection apparatus 1B holds tag data on each vehicle as a database, and can select the above-mentioned vehicle satisfying the collection condition from the database.

Subsequently, the data collection apparatus 1B transmits a filtering request for a data type satisfying the collection condition to the on-vehicle device 50B in the vehicle C selected at Step S2 (Step S3). In this manner, the on-vehicle device 50B can filter the data type satisfying the collection condition based on the filtering request (Step S4). The on-vehicle device 50B may start to record data of the designated data type in response to the filtering request.

After that, when the data collection apparatus 1B acquires any trigger such as a data provision request to the on-vehicle device 50B that has transmitted the filtering request, the data collection apparatus 1B transmits a transmission request for data (group) filtered at Step S4 (Step S5).

In this manner, the on-vehicle device 50B transmits the filtered data to the data collection apparatus 1B (Step S6). In other words, the data collection apparatus 1B collects only desired data from each on-vehicle device 50B, and hence can suppress the communication load between the data collection apparatus 1 and each on-vehicle device 50B.

In this manner, the data collection apparatus 1B can quickly collect data. The data collection apparatus 1B provides the collected data to each user (Step S7).

In this manner, the data collection apparatus 1B according to the embodiment collects only data desired by the user from each on-vehicle device 50B, and hence can suppress the communication volume of data transmitted from each on-vehicle device 50B.

Thus, the data collection apparatus 1B according to the embodiment can quickly collect data desired by the user from each on-vehicle device 50B, and hence can quickly provide data.

The data collection apparatus 1B according to the embodiment can transmit a transmission request for tag data corresponding to a collection condition to each on-vehicle device 50B in advance, and requests the transmission of real data based on the tag data. This matter is described later.

The data collection system according to the present embodiment has the same configuration and operation as those of the data collection system illustrated in FIG. 6, and hence descriptions thereof are omitted.

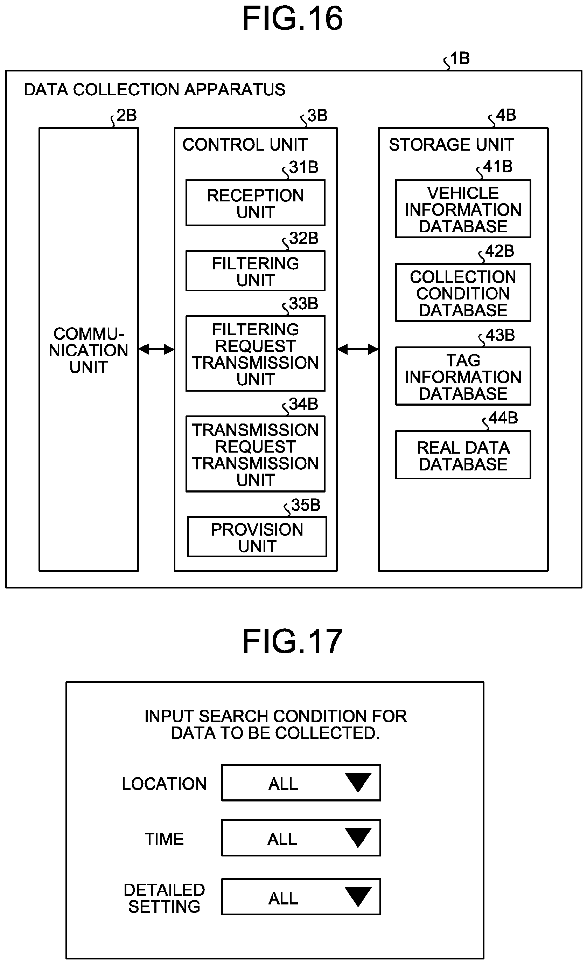

Next, a configuration example of the data collection apparatus 1B according to the embodiment is described with reference to FIG. 16. FIG. 16 is a block diagram of the data collection apparatus 1B. As illustrated in FIG. 16, the data collection apparatus 1B includes a communication unit 2B, a control unit 3B, and a storage unit 4B.

The communication unit 2B is a communication interface for transmitting and receiving information to and from the network N. The control unit 3B can transmit and receive various kinds of information to and from the units through the communication unit 2B and the network N.

The control unit 3B includes a reception unit 31B, a selection unit 32B, a filtering request transmission unit 33B, a transmission request transmission unit 34B, and a providing unit 35B. For example, the control unit 3B includes a computer having a central processing unit (CPU), a read only memory (ROM), a random access memory (RAM), a hard disk drive (HDD) and an input/output port, and various kinds of circuits.

For example, the CPU in the computer reads and executes a computer program stored in the ROM to function as the reception unit 31B, the selection unit 32B, the filtering request transmission unit 33B, the transmission request transmission unit 34B, and the providing unit 35B in the control unit 3B.

At least a part or whole of the reception unit 31B, the selection unit 32B, the filtering request transmission unit 33B, the transmission request transmission unit 34B, and the providing unit 35B in the control unit 3B may be configured by hardware such as an application specific integrated circuit (ASIC) and a field programmable gate array (FPGA).

For example, the storage unit 4B corresponds to a RAM or an HDD. The RAM or the HDD includes a vehicle information database 41B, a collection condition database 42B, a tag data database 43B, and a real data database 44B. The data collection apparatus 1B may acquire the above-mentioned program and various kinds of information through another computer connected by a wired or wireless network or a portable recording medium.

For example, the vehicle information database 41B has a vehicle information table related to each vehicle as illustrated in FIG. 8. For example, the collection condition database 42B has a collection condition table related to collection conditions received from the user terminal 10 as illustrated in FIG. 9.

The tag data database 43B is a database that stores therein tag data transmitted from each on-vehicle device 50B. For example, in the tag data database 43B, information on time, a tag data ID, and an on-vehicle device ID may be added to tag data for each request ID and stored. The tag data database 43B is an example of a tag data storage unit.

The real data database 44B is a database that stores therein real data collected from each on-vehicle device 50B based on tag data. Information stored in the tag data database 43B and the real data database 44B is appropriately provided to a user by the providing unit 35B.

Subsequently, each configuration in the control unit 3B is described. The reception unit 31B in the control unit 3B receives, from a user terminal 10, a collection request including a collection condition of target data to be collected. When the reception unit 31B receives the collection condition, the reception unit 31B adds the above-mentioned request ID to the collection condition, and registers the collection condition in the collection condition database 42B.

The reception unit 31B functions as a tag data reception unit. The reception unit 31B can receive tag update information on tag data from the on-vehicle device 50B, and update stored contents in the tag data database 43B with the received tag update information to synchronize the tag data stored in the on-vehicle device 50B and tag data stored in the tag data database 43B.

The reception unit 31B functions as a real data reception unit. When the reception unit 31B receives real data from the on-vehicle device 50B, the reception unit 31B registers the real data in the real data database 44B.

The reception unit 31B can receive, from the user terminal 10, designation of target data for which a transmission request is to be transmitted. When the reception unit 31B receives designation of target data, the reception unit 31B notifies the transmission request transmission unit 34B of the designation of target data.

The selection unit 32B selects a vehicle satisfying the collection condition. The selection unit 32B refers to the vehicle information database 41B to select a vehicle satisfying the collection condition registered in the collection condition database 42B. In this case, when one vehicle satisfies a plurality of collection conditions, the collection conditions are applied to one vehicle.

The selection unit 32B generates a collection condition file indicating the collection condition for each vehicle, and notifies the filtering request transmission unit 33B of the collection condition file. When the collection condition database 42B is updated, the selection unit 32B can update each collection condition.

In this case, the selection unit 32B can select a vehicle satisfying the collection condition based on in-vehicle accessories in the vehicle information table in the vehicle information database 41B. Specifically, when a camera image is included in the collection condition, the selection unit 32B can determine that a vehicle that does not include a camera as an in-vehicle accessory does not satisfy the collection condition.

The filtering request transmission unit 33B transmits a filtering request for the data type designated by the collection condition to the on-vehicle device 50B mounted on the vehicle selected by the selection unit 32B. Specifically, the filtering request transmission unit 33B transmits a collection condition file generated by the selection unit 32B to each on-vehicle device 50B.

When the collection condition file for each on-vehicle device 50B is updated by the selection unit 32B, the filtering request transmission unit 33B can transmit an update command for the collection condition file to the on-vehicle device 50B together with the updated collection condition file.

In other words, the filtering request transmission unit 33B synchronizes the collection condition file generated by the selection unit 32B with a collection condition file in each on-vehicle device 50B. In this manner, the collection condition file stored in each on-vehicle device 50B can be synchronized with the latest collection condition file. Consequently, only target data needed by each user (real data: acquisition data not converted into tag data) can be collected, and unnecessary collection of target data can be avoided.

The transmission request transmission unit 34B transmits a transmission request for data filtered and collected based on the filtering request. Specifically, the transmission request transmission unit 34B can transmit a transmission request for data corresponding to tag data designated by a user.

In this case, the user can select which of target data is to be collected based on the tag data provided by the providing unit 35B. The transmission request transmission unit 34B transmits a transmission request for target data corresponding to tag data designated by the user to the on-vehicle device 50B that has transmitted the designated tag data.

In this manner, the on-vehicle device 50B transmits target data corresponding to tag data to the data collection apparatus 1B. Consequently, the data collection apparatus 1B can collect only target data desired by a user, and hence communication load in the data collection apparatus 1B and among the on-vehicle devices 50B can be suppressed.

The providing unit 35B provides tag data and real data to the user terminal 10. First, the case where the providing unit 35B provides tag data is described. In this case, the providing unit 35B provides tag data by a method for displaying, on each user terminal 10, tag data near a selection button as information for selecting target data on a reception screen for performing an operation of designating target data for which a target data is made.

FIG. 17 is a diagram illustrating an example of a reception screen. As illustrated in FIG. 17, designation of "location", "time", and "detailed setting" can be received from the user through the reception screen.

For example, when the user selects a location, the user can select a position at which tag data was generated (position of trigger (data collection condition was established)). Examples of selection items of the location include "selection from map" (not illustrated). For example, when the user selects "selection from map", tag data is displayed on the user terminal 10 at a position at which the tag data was generated on the map image in association with the position.

In other words, the providing unit 35B can provide tag data by mapping the tag data on a map. In this manner, the user is allowed to easily grasp position information on the tag data. By selecting tag data mapped on the map, the user can designate tag data for collecting real data.

When the user selects the time illustrated in FIG. 17, the user can designate the time when tag data was generated. For example, when the user selects detailed setting illustrated in FIG. 17, the user can select a collection request for other real data. In the above-mentioned example, the location and time are designated in a pinpoint manner, but the user can designate the range such as designating a region or a time zone.

The above-mentioned transmission request transmission unit 34B transmits a transmission request to request the provision of real data to the on-vehicle device 50B that has provided the tag data designated by the user.

After that, the providing unit 35B provides each user terminal 10 with real data transmitted from on-vehicle device 50B based on the transmission request transmitted by the transmission request transmission unit 34B.

In this manner, the data collection apparatus 1B collects tag data in advance, and collects real data on tag data designated by the user. Consequently, only real data desired by the user can be collected and provided to the user. In this manner, data desired by the user can be quickly provided.

The case where the user designates tag data that is a transmission target of a transmission request has been described above. However, the selection can be performed on the data collection apparatus 1B side. For example, the case where the user is a driver of the vehicle and camera video at a given location is provided to the driver is assumed. In this case, the data collection apparatus 1B collects position information from each on-vehicle device 50B in advance as tag data, and selects a vehicle located near a location designated by the driver. Next, the data collection apparatus 1B can collect camera video from the corresponding on-vehicle device 50B, and provide the camera video to the driver.

The on-vehicle device 50B according to the present embodiment has the same configuration and operation as in the on-vehicle device A illustrated in FIG. 11, and hence descriptions thereof are omitted.

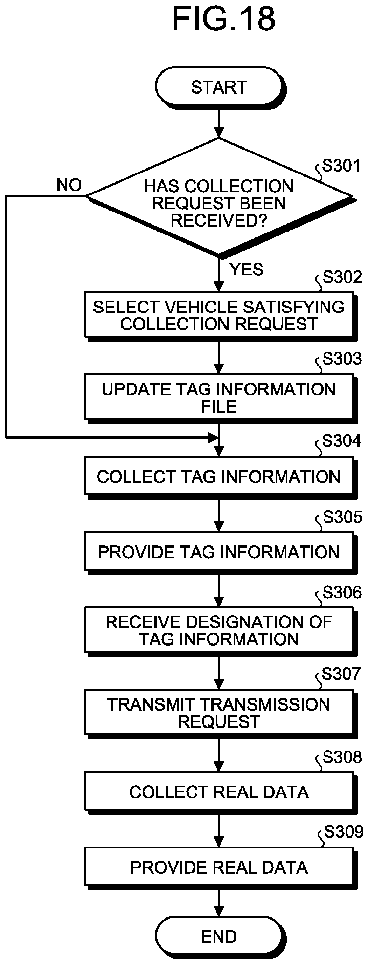

Next, a processing procedure executed by the data collection apparatus 1B according to the embodiment is described with reference to FIG. 18. FIG. 18 is a flowchart illustrating the processing procedure executed by the data collection apparatus 1B according to the embodiment. This processing is repeatedly executed while the data collection apparatus 1B is operating.

First, as illustrated in FIG. 18, the data collection apparatus 1B determines whether a new collection request has been received (Step S301). When the collection request has been received (Yes at Step S301), the data collection apparatus 1B selects a vehicle satisfying a collection condition (Step S302).

Subsequently, the data collection apparatus 1B updates the collection condition file in the on-vehicle device 50B mounted on the vehicle selected by the processing at Step S302 by transmitting update data and an update instruction command to the target vehicle (Step S303). Subsequently, the data collection apparatus 1B collects tag data from each on-vehicle device 50B (Step S304), and provides the collected tag data to a user (Step S305).

The above-mentioned update data includes a new collection condition file and a change collection condition file, and the update instruction command is a command for instructing new registration or change registration of the files and instructing deletion of a file to be deleted. The data collection apparatus 1B grasp collection condition file information on a target vehicle from the past transmission history, and hence can respond by a method for replacing all collection conditions in the target vehicle (all new collection condition files are generated and transmitted together with update instruction).

Subsequently, the data collection apparatus 1B receives designation of tag data for collecting real data from the user (Step S306), and transmits a transmission request to the on-vehicle device 50B that has transmitted the designated tag data (Step S307).

After that, the data collection apparatus 1B collects real data from each on-vehicle device 50B (Step S308), provides the collected real data to the user (Step S309), and finishes the processing. On the other hand, when the data collection apparatus 1B has not received a new collection condition (No at Step S301), the data collection apparatus 1B proceeds to the processing at Step S304. As described above, when the data collection apparatus 1B selects a target vehicle of the transmission request, the processing at Step S305 and Step S306 is replaced with "selecting tag data that is a transmission target of the transmission request".

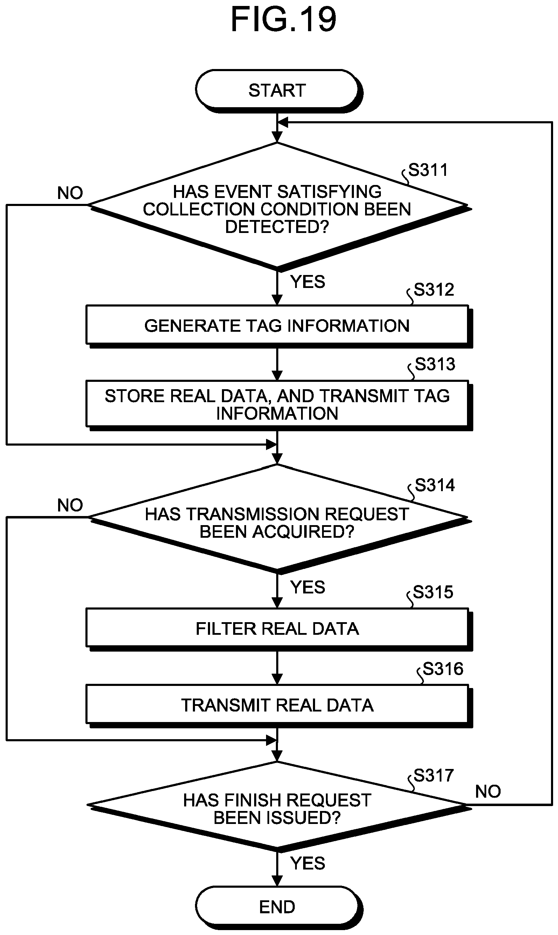

Subsequently, a processing procedure executed by the on-vehicle device 50B is described with reference to FIG. 19. FIG. 19 is a flowchart illustrating the processing procedure executed by the on-vehicle device 50B. This processing is executed when a data collection request is issued by the data collection apparatus 1B.

As illustrated in FIG. 19, first, the on-vehicle device 50B determines whether an event satisfying a collection condition has been detected (Step S311). When an event has been detected (Yes at Step S311), the on-vehicle device 50B generates tag data designated by the collection condition file (Step S312). When the on-vehicle device 50B has not detected an event in the processing at Step S311 (No at Step S311), the on-vehicle device 50B proceeds to the processing at Step S314.

In regard to a collection condition to be detected, when an event satisfying a collection condition among all collection conditions registered in the on-vehicle device 50B has been detected, processing for generating tag data and storing real data is performed for the collection condition.

Subsequently, the on-vehicle device 50B stores real data corresponding to tag data therein and transmits the tag data (Step S313), and determines whether a transmission request has been acquired from the data collection apparatus 1B (Step S314).

When the on-vehicle device 50B has acquired a transmission request (Yes at Step S314), the on-vehicle device 50B filters real data to be transmitted (Step S315). Subsequently, the on-vehicle device 50B transmits the filtered real data to the data collection apparatus 1B (Step S316), and determines whether a finish request to finish the collection of real data has been issued (Step S317). Examples of the finish request include an update of the collection condition file.

When the finish request has been issued (Yes at Step S317), the on-vehicle device 50B finishes the processing. When the finish request has not been issued (No at Step S317), the on-vehicle device 50B proceeds to the processing at Step S311.

When the on-vehicle device 50B has not acquired the transmission request (No at Step S314), the on-vehicle device 50B proceeds to the processing at Step S317.

As described above, the data collection apparatus 1B according to the embodiment includes the reception unit 31B, the selection unit 32B, the filtering request transmission unit 33B, and the transmission request transmission unit 34B. The reception unit 31B receives a collection request including a collection condition for target data to be collected. The selection unit 32B selects a vehicle satisfying the collection condition received by the reception unit 31B. The filtering request transmission unit 33B transmits a filtering request for the data type designated by the collection condition to the on-vehicle device 50B mounted on the vehicle selected by the selection unit 32B. The transmission request transmission unit 34B transmits a transmission request for data filtered based on the filtering request.

The data collection apparatus 1B according to the embodiment includes the providing unit 35B that provides target data transmitted from the on-vehicle device 50B based on a transmission request transmitted from the transmission request transmission unit 34B.

In the data collection apparatus 1B according to the embodiment, the transmission request transmission unit 34B transmits a tag data request, which is a request to transmit tag data corresponding to target data corresponding to a collection condition, and transmits designated tag data, which has been designated based on tag data transmitted from the on-vehicle device 50B in accordance with the tag data request, the on-vehicle device 50B that has transmitted the tag data as a target data request.

In the data collection apparatus 1B according to the embodiment, the filtering request transmission unit 33B transmits the collection condition as a collection condition file, and synchronizes the collection condition file with a collection condition file in the on-vehicle device 50B each time the collection condition file is updated.

In the data collection apparatus 1B according to the embodiment, the providing unit 35B provides tag data generated based on data collected based on the collection condition, and the transmission request transmission unit 34B transmits a target data request for target data corresponding to designated tag data among the tag data provided from the providing unit 35B.

In the data collection apparatus 1B according to the embodiment, the providing unit 35B provides the tag data while mapping the tag data on a map image based on position information included in the tag data.

The data collection apparatus 1B according to the embodiment includes: the reception unit 31B (example of tag data reception unit) that receives tag data transmitted from the on-vehicle device 50B; and the tag data database 43B (example of tag data storage unit) that stores therein the tag data received by the reception unit 31B (example of tag data reception unit). The reception unit 31B (example of tag data reception unit) receives tag update information on the tag data from the on-vehicle device 50B, and updates stored contents in the tag data database 43B (example of tag data storage unit) with the received tag update information to synchronize tag data stored in the on-vehicle device 50B and the tag data stored in the tag data database 43B (example of tag data storage unit).

The data collection system S according to the embodiment includes: the data collection apparatus 1B; and the on-vehicle device 50B that filters a data type and transmits data based on a transmission request transmitted from the data collection apparatus 1B.

In the data collection system S according to the embodiment, the on-vehicle device 50B generates tag data corresponding to target data collected in accordance with a filtering request and transmits the tag data to the data collection apparatus 1B, and filters target data corresponding to designated tag data to the data collection apparatus 1B in accordance with the transmission request.

### Third embodiment

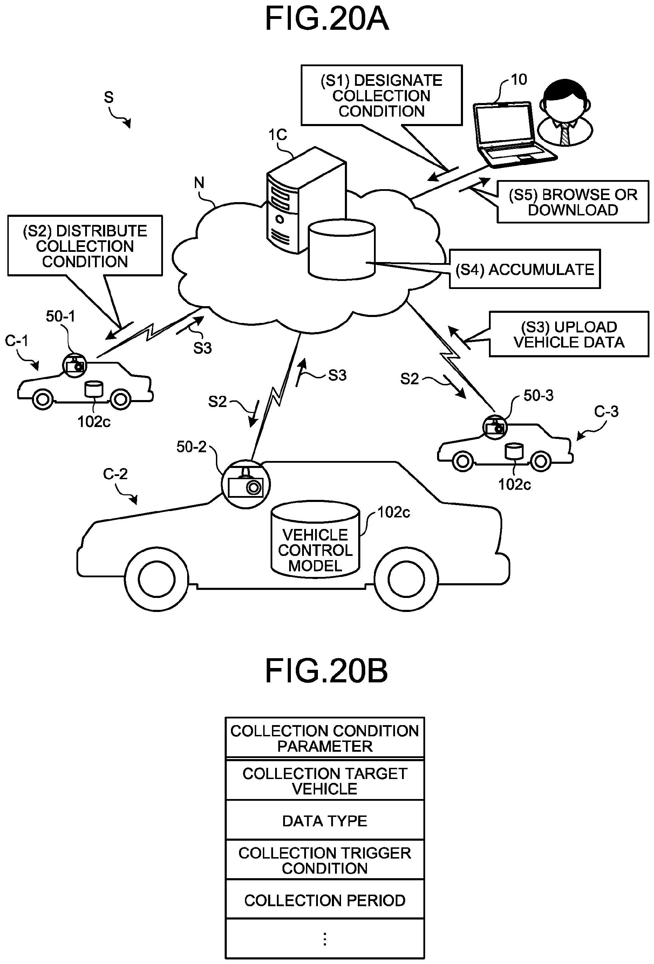

Next, the outline of a data collection method according to a third embodiment is described with reference to FIG. 20A to FIG. 20H. FIG. 20A to FIG. 20H are schematic explanation diagrams of the data collection method according to the embodiment. In FIG. 20A to FIG. 20H, description is given by taking a data collection system S to which the data collection method according to the embodiment is applied as an example.

As illustrated in FIG. 20A, the data collection system S according to the embodiment includes the data collection apparatus 1C, on-vehicle devices 50C-1, 50C-2, 50C-3 ... mounted on vehicles C-1, C-2, C-3 ..., respectively, and a user terminal 10. In the following, general vehicles are referred to as "vehicles C", and general on-vehicle devices are referred to as "on-vehicle devices 50C".

In the following, the vehicle C is an automatic driving vehicle, and automatic driving control is performed by a vehicle control model 102c mounted on each vehicle C. For example, the vehicle control model 102c is a learning model generated by machine learning such as deep learning, which analyzes vehicle data collected from the vehicle C and is based on the result.

For example, the data collection apparatus 1C is formed as a cloud server that provides cloud service through a network N such as the Internet and a mobile phone line network, and receives a collection request for vehicle data from a data user, collects vehicle data from each on-vehicle device 50C based on the received collection request, and provides the vehicle data to the data user.

For example, the on-vehicle device 50C is a drive recorder having a camera, various kinds of sensors such as an acceleration sensor and a global positioning system (GPS) sensor, a storage device, and a microcomputer, and collects vehicle data corresponding to a collection request received by the data collection apparatus 1C from the vehicle C.

The on-vehicle device 50C uploads the collected vehicle data to the data collection apparatus 1C as needed. By using the drive recorder also as the on-vehicle device 50, in-vehicle parts mounted on the vehicle C can be made efficient. The on-vehicle device 50C and the drive recorder may be configured separately without being used as a single unit.

The user terminal 10 is a terminal used by a data user, and is, for example, a notebook personal computer (PC), a desktop PC, a tablet terminal, a personal digital assistant (PDA), a smartphone, or a wearable device such as a glasses type or watch type information processing terminal.

The data user is, for example, a developer who develops automatic driving technology based on vehicle data provided from the data collection apparatus 1C. The data collection apparatus 1C provides the data user with a user interface (hereinafter referred to as "UI") screen that can be accessed through the user terminal 10.

The data user designates a collection condition of vehicle data through the UI screen as illustrated in FIG. 20A (Step S1). Then, the data collection apparatus 1C that has received the collection condition distributes the collection condition to each vehicle C in the form of a file, for example (Step S2).

As illustrated in FIG. 20B, various kinds of parameters related to collection of vehicle data are included in the collection condition. As illustrated in FIG. 20B, examples of various kinds of parameters include "target vehicle", "data type", "collection trigger condition", and "collection period".

The "collection target vehicle" is identification information on a vehicle C as a collection target. The "collection target vehicle" corresponds to an example of "collection target vehicle condition", which is one of the collection conditions. The "data type" is the type of data to be collected, and is, for example, an acceleration opening degree. The "collection trigger condition" is a condition serving as a trigger for collection, and is, for example, a case where vehicle speed has exceeded predetermined speed. The "collection period" is a period during which data is collected. The "data type", "collection trigger condition", and the "collection period" are an example of "collection data condition", which is one of the collection conditions.

Each on-vehicle device 50C uploads vehicle data collected in each vehicle C to the data collection apparatus 1C continuously or based on an upload request from the data collection apparatus 1C (Step S3), and the data collection apparatus 1C accumulates the vehicle data therein (Step S4). For example, the data user browses or downloads the vehicle data accumulated in the data collection apparatus 1C through the above-mentioned UI screen (Step S5), and uses the vehicle data for analysis for development.

Although not illustrated in FIG. 20A, vehicle data uploaded by the on-vehicle device 50C includes tag data T and real data R.

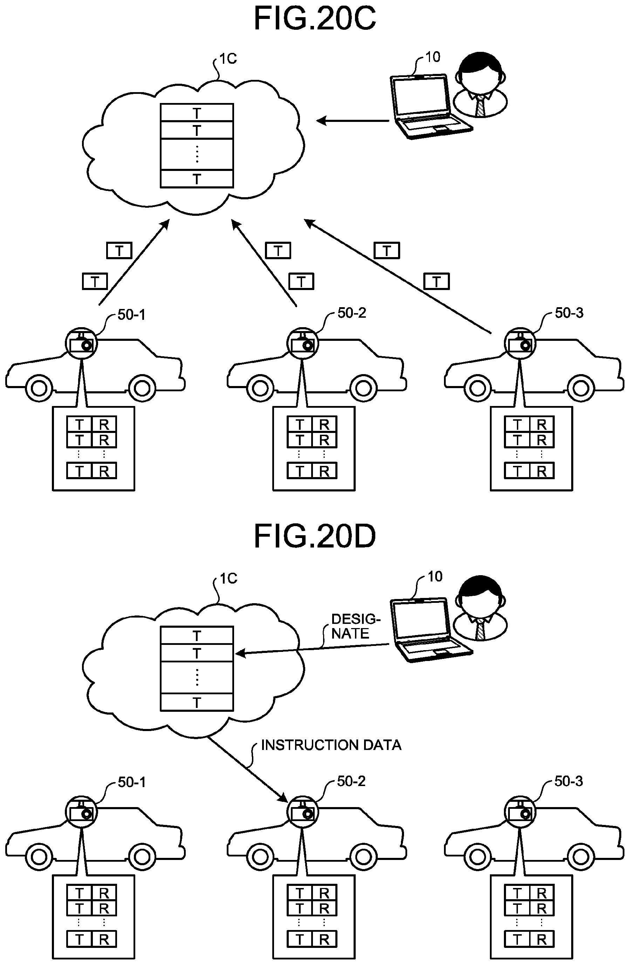

A series of flow until vehicle data is provided to the data user including the above-mentioned matter in the data collection system S is more specifically described with reference to FIG. 20C to FIG. 20E. As illustrated in FIG. 20C, first, the data user designates a collection condition through the user terminal 10 connected to the data collection apparatus 1C.

In this case, the data collection apparatus 1C generates data for generating tag data T, which has characteristics of index data added to real data R to be collected and used for searching and schematic grasping of the real data R. The data for generating tag data T is generated based on operation by the data user by using a computer program or generation data stored in the user terminal 10 or the data collection apparatus 1C.

The designated collection condition and the generated data for generating tag data T are stored in the data collection apparatus 1C, and are distributed to the vehicle C from which data is to be collected and stored in the on-vehicle device 50C.

Next, each on-vehicle device 50C monitors data output from various kinds of sensors, and when an event satisfying the stored collection condition has occurred, stores corresponding real data R in a storage device. Based on the stored data for generating tag data T and real data R, each on-vehicle device 50C generates tag data T corresponding to the real data R and stores the tag data T therein.

It is preferred that the tag data T be converted into meta information that can grasp the outline of real data R and determine the necessity of real data R when the data user references the tag data T, rather than data obtained by simply extracting a part of real data R.

Each on-vehicle device 50C uploads tag data T to the data collection apparatus 1C, and the data collection apparatus 1C stores the tag data T therein. In this case, real data R is not uploaded to the data collection apparatus 1C.

When the data user uses the user terminal 10 to connect to the data collection apparatus 1C in order to check the data collection state and collect the real data R, meta information based on the tag data T collected by the data collection apparatus 1C is displayed on the user terminal 10. In addition, a UI screen for performing an operation to collect real data R corresponding to each tag data T is displayed.

As illustrated in FIG. 20D, when the data user uses the user terminal 10 to designate tag data T corresponding to real data R to be collected, "instruction data" that designates the real data R is transmitted to the on-vehicle device 50C through the data collection apparatus 1C. In the following, the instruction data is sometimes referred to as "upload request".

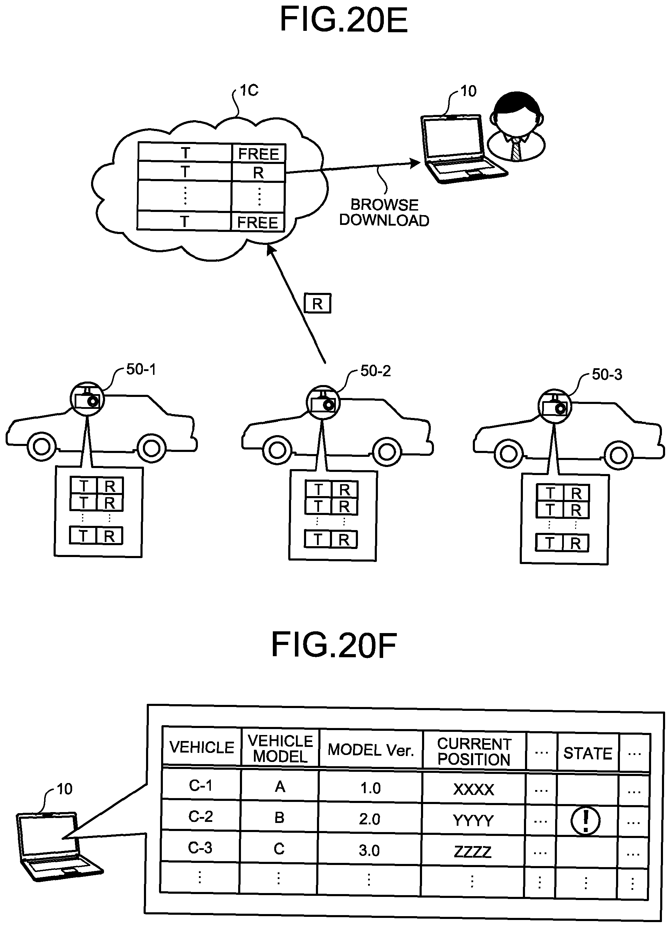

After that, as illustrated in FIG. 20E, the designated real data R is uploaded from each on-vehicle device 50C to the data collection apparatus 1C and stored in the data collection apparatus 1C. The data user uses the user terminal 10 to access the real data R stored in the data collection apparatus 1C, and browses and downloads the real data R.

From the viewpoint of the storage capacity of the on-vehicle device 50C, it is preferred that real data R uploaded to the data collection apparatus 1C and corresponding tag data T be deleted from the on-vehicle device 50 after the uploading to the data collection apparatus 1C is completed.

Based on the tag data T collected in the data collection apparatus 1C as described above, the situation of each vehicle C, such as what version of the vehicle control model 102c is mounted on each vehicle C, where the vehicle is currently traveling, and what behavior of the vehicle C is indicated by controller area network (CAN) data, can be virtually grasped by meta information.

In the data collection method according to the embodiment, first, a vehicle C indicating a behavior to be evaluated for automatic driving control is extracted based on the situation of each vehicle C. Then, not only the extracted vehicles C but also vehicles C similar to the vehicles C, such as vehicles having the same vehicle model, the same version of the vehicle control model 102c, and similar traveling environments such as the number of occupants, manufacturing year, traveling distance, and weather, are collectively set as collection target vehicles for vehicle data for desired evaluation of the vehicle control model 102c.

A collection condition including these vehicles as target collection vehicles is newly designated. Vehicle data is collected from the vehicles C based on the collection condition, and the collected vehicle data is analyzed. The vehicle control model 102c is updated based on the analysis result.

Specifically, as illustrated in FIG. 20F, in the data collection method according to the embodiment, for example, the user terminal 10 is used to virtually grasp the situation of each vehicle C based on continuously collected tag data T. Regarding automatic driving control, a predetermined determination condition is set in advance such that a vehicle C indicating a behavior to be evaluated can be determined. Irrespective of whether the behavior to be evaluated is normal or abnormal, the following description assumes that a vehicle C extracted under the determination condition is "abnormal" for the sake of description.

It is assumed that a vehicle C-2 is determined to be abnormal by the determination condition as illustrated in FIG. 20F (see exclamation mark in FIG. 20F).

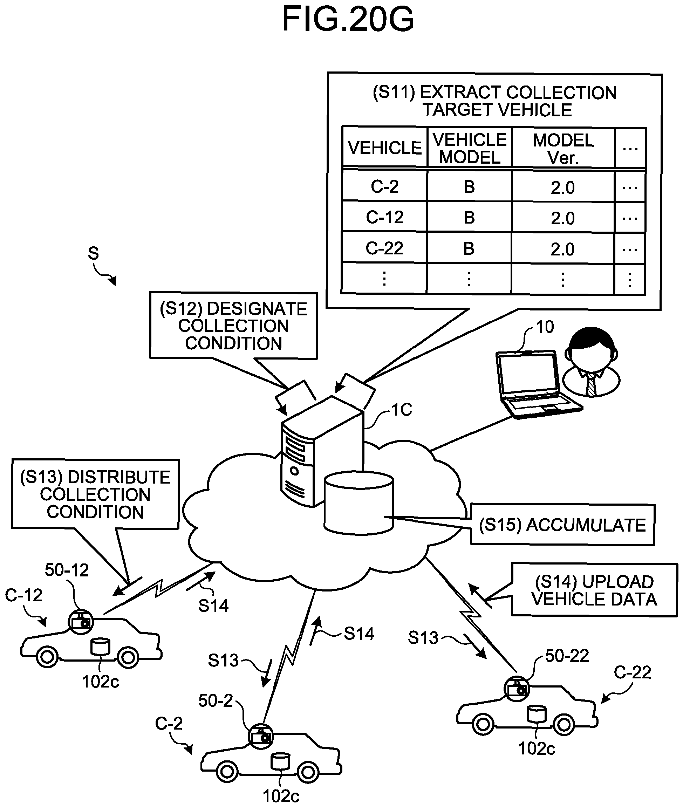

In the data collection method according to the embodiment, as illustrated in FIG. 20G, the data collection apparatus 1C extracts a collection target vehicle based on the vehicle C-2 (Step S11). For example, FIG. 20G illustrates an example in which vehicles of the same vehicle model "B" and with the same version "2.0" of the vehicle control model 102c as the vehicle C-2 are extracted as collection target vehicles.

For example, the data collection apparatus 1C designates a collection condition including each vehicle C set as a collection target vehicle as a collection target vehicle condition (Step S12). The collection condition may be the same among the vehicles C, or may be independent such that a variety of vehicle data can be collected. It should be understood that a data user instead of the data collection apparatus 1C may designate a collection condition by using the user terminal 10. Examples of the collection conditions include collection conditions set in accordance with abnormality types, and the collection conditions are stored in the form of a table. The table is searched in accordance with the type of the abnormality determined in the above. Collection conditions associated with the matched abnormality type as a result of the search are extracted. In other words, the collection condition can be registered in advance as preset information in accordance with the abnormality type, and by using this, the designation of the collection condition can be simplified.

The data collection apparatus 1C distributes a collection condition to each vehicle C (Step S13). Each on-vehicle device 50 uploads vehicle data based on the collection condition (Step S14). The data collection apparatus 1C accumulates the vehicle data therein (Step S15) .

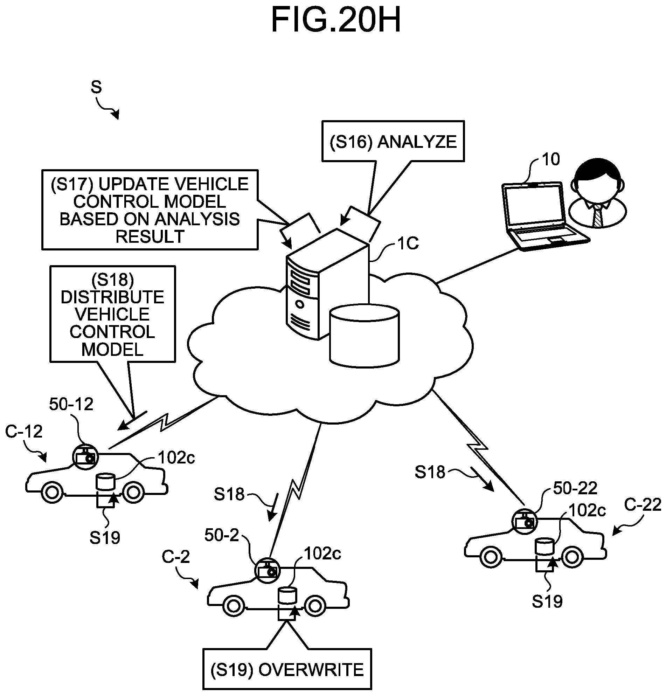

As illustrated in FIG. 20H, the data collection apparatus 1C analyzes the vehicle data accumulated at Step S15 (see FIG. 20G) (Step S16). For example, the analysis includes analyzing when, where, and what kind of control is performed by the vehicle control model 102c and the reason thereof. Then, the analysis includes analyzing what kind of a learning data set is given for updating the vehicle control model 102c, in other words, how parameters related to control of the vehicle C are set.

The data collection apparatus 1C updates the vehicle control model 102c based on the analysis result (Step S17). Then, the data collection apparatus 1C distributes the vehicle control model 102c to each vehicle C (Step S18), and, for example, the on-vehicle device 50C overwrites the vehicle control model 102c with a new vehicle control model 102c (Step S19).

In this manner, in the data collection method according to the embodiment, a vehicle C indicating a desired behavior related to vehicle control is determined based on vehicle data indicating overall conditions of each vehicle C. Based on the determination result, a collection condition of vehicle data for evaluating parameters related to the above-mentioned vehicle control is extracted.

Vehicle data for evaluation is collected based on the extracted collection condition, and the collected vehicle data is analyzed.

Consequently, the data collection method according to the embodiment can evaluate the compatibility of parameters related to control of the vehicle C. In the following, a configuration example of the data collection method S according to the embodiment is more specifically described.

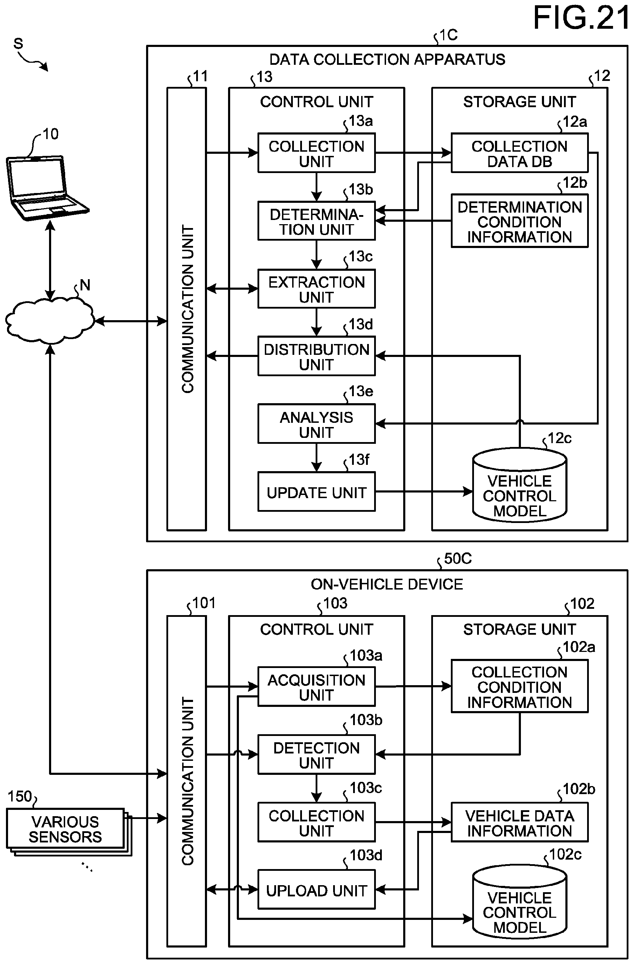

FIG. 21 is a block diagram illustrating a configuration example of the data collection system S according to the embodiment. FIG. 21 illustrates only components necessary for describing the features in the embodiment, and the illustration of general components is omitted.

In other words, the components illustrated in FIG. 21 are functionally conceptual, and the system is not necessarily needed to be physically configured as illustrated in FIG. 21. For example, specific forms of distribution and integration of blocks are not limited to the illustrated ones, and the whole or a part of the blocks can be functionally or physically distributed or integrated in desired units depending on various kinds of loads and use situations.

In the description with reference to FIG. 21, descriptions of components already described above are sometimes simplified or omitted.

As illustrated in FIG. 21, the data collection method S according to the embodiment includes a data collection apparatus 1C, an on-vehicle device 50C, and a user terminal 10.

First, the data collection apparatus 1C is described. The data collection apparatus 1C includes a communication unit 11, a storage unit 12, and a control unit 13.

For example, the communication unit 11 is implemented by a network interface card (NIC). The communication unit 11 is connected to a network N by wired or wireless communication, and transmits and receives information to and from the on-vehicle device 50C and the user terminal 10 through the network N.

For example, the storage unit 12 is implemented by a semiconductor memory element such as a random access memory (RAM) and a flash memory or a storage device such as a hard disk and an optical disc. In the example in FIG. 21, the storage unit 12 stores a collected data DB 12a, determination condition information 12b, and a vehicle control model 102c therein.

The collected data DB 12a accumulates therein a collection condition designated from a user terminal 200 and vehicle data collected from each on-vehicle device 50C based on the collection condition. Specifically, the collected data DB 12a includes the past records of the collection condition and vehicle data collected by the collection condition. The vehicle data as used herein include the above-mentioned tag data T and real data R.

The determination condition information 12b is information on a determination condition for determining a vehicle C indicating a desired behavior related to automatic driving control based on tag data T indicating overall conditions of each vehicle C. Thus, in the determination condition information 12b, the data type for identifying the behavior of the vehicle C and a threshold are included.

The vehicle control model 102c is a learning model for performing automatic driving control of each vehicle C as described above, and is updated by an update unit 13f described later.

The control unit 13 is a controller. For example, the control unit 13 is implemented when various kinds of computer programs stored in a storage device in the data collection apparatus 1C are executed by a central processing unit (CPU) or a micro processing unit (MPU) by using a RAM as a working area. For example, the control unit 13 is implemented by an integrated circuit such as an application specific integrated circuit (ASIC) and a field programmable gate array (FPGA).

The control unit 13 includes a collection unit 13a, a determination unit 13b, an extraction unit 13c, a distribution unit 13d, an analysis unit 13e, and the update unit 13f, and implements or executes functions and actions of information processing described below.

The collection unit 13a collects vehicle data which is designated in advance and uploaded from the on-vehicle device 50C based on a distributed collection condition, and stores the vehicle data in the collected data DB 12a.

The determination unit 13b determines a vehicle C indicating a behavior to be evaluated above automatic driving control based on tag data T and determination condition information 12b stored in the collected data DB 12a. The determination unit 13b notifies the extraction unit 13c of the determination result.

The extraction unit 13c extracts, based on the determination result of the determination unit 13b, a vehicle C serving as a collection target vehicle from which vehicle data for evaluating a vehicle control model 102c is to be collected. The extraction unit 13c sets a collection condition including the extracts vehicle C as a collection target vehicle as a collection target vehicle condition.

For example, the extraction unit 13c sets a collection condition based on parameters for evaluating the vehicle control model 102c provided in advance. For example, the extraction unit 13c displays a list of vehicles C as collection target vehicles on a UI screen of the user terminal 200, and sets a collection condition based on designation from the data user through the UI screen.

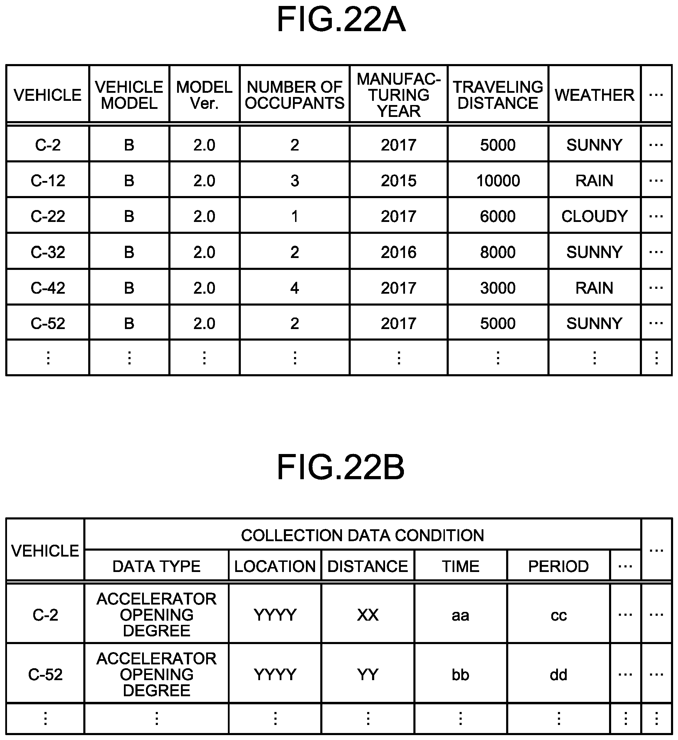

An example of extraction processing by the extraction unit 13c is described with reference to FIG. 22A and FIG. 22B. FIG. 22A and FIG. 22B are diagrams illustrating an example of extraction processing.

Similarly to the above description with reference to FIG. 20F, it is assumed that the vehicle C-2 is determined to be abnormal by the determination unit 13b. In such a case, as illustrated in FIG. 22A, for example, the extraction unit 13c extracts vehicles with the same vehicle model and the same version of the vehicle control model 102c as the vehicle C-2 as collection target vehicles.

As illustrated in FIG. 22A, even when the vehicle models and the versions are the same, various elements of the situations of the vehicles C such as "number of occupants", "manufacturing year", "traveling distance", and "weather" at the current position are different in general, and hence the searching may be narrowed down to vehicles in closer situations. For example, when the searching is narrowed down to vehicles having similar "number of occupants", "manufacturing year", "traveling distance", and "weather", at least vehicles C-2 and C-52 are selected in this case.

As illustrated in FIG. 22B, collection data conditions are designated for the vehicles C-2 and C-52. In this case, an example in which the data type to be collected is "accelerator opening degree" and the collection location is "YYYY" is indicated.

It is preferred that, for example, the collection data conditions be designated such that collected distances, times, and periods are different in order to prevent biased evaluation caused when only the same vehicle data is collected from the vehicles C-2 and C-52 selected as similar collection target vehicles. In this manner, this configuration can contribute to the improvement of versatility of the vehicle control model 102c.

Returning to description with reference to FIG. 21, the distribution unit 13d is subsequently described. The distribution unit 13d distributes the collection condition set by the extraction unit 13c to each vehicle C through the communication unit 11 in the form of a file. Vehicle data for evaluating a vehicle control model 102c based on the collection condition distributed by the distribution unit 13d is collected by the collection unit 13a and stored in the collected data DB 12a.

The analysis unit 13e analyzes vehicle data for evaluating a vehicle control model 102c, which is collected by the collection unit 13a, and notifies the update unit 13f of the analysis result. For example, the update unit 13f executes additional learning based on the analysis result of the analysis unit 13e, and updates the vehicle control model 102c.

The vehicle control model 102c updated by the update unit 13f is distributed by the distribution unit 13d to vehicles C to be updated (for example, vehicles having same version of vehicle control model 102c).

Next, the on-vehicle device 50C is described. The on-vehicle device 50C includes a communication unit 101, a storage unit 102, and a control unit 103. As described above, the on-vehicle device 50C is connected to a camera and various kinds of sensors 150 such as an acceleration sensor and a GPS sensor as described above.

For example, the communication unit 101 is implemented by a NIC similarly to the communication unit 11. The communication unit 101 is connected to a network N by wireless communication, and transmits and receives information to and from the data collection apparatus 1C through the network N. The communication unit 101 receives data output from various kinds of sensors 150.

For example, the storage unit 102 is implemented by a semiconductor memory element such as a RAM and a flash memory. In the example in FIG. 21, the storage unit 102 stores collection condition information 102a, vehicle data information 102b, and a vehicle control model 102c therein.

The collection condition information 102a is information including a collection condition distributed from the data collection apparatus 1C. The vehicle data information 102b is information including vehicle data collected by a collection unit 103c described later. The vehicle data includes the above-mentioned tag data T and real data R. The vehicle control model 102c is a vehicle control model distributed from the data collection apparatus 1C.

The control unit 103 is a controller similarly to the control unit 13. For example, the control unit 103 is implemented when various kinds of computer programs stored in a storage device in the on-vehicle device 50C are executed by a CPU or an MPU by using a RAM as a working area. For example, the control unit 103 can be implemented by an integrated circuit such as an ASIC and an FPGA.

The control unit 103 includes an acquisition unit 103a, a detection unit 103b, a collection unit 103c, and an upload unit 103d, and implements or executes functions and actions of information processing described below.

The acquisition unit 103a acquires a collection condition distributed from the data collection apparatus 1C, and stores the collection condition in the collection condition information 102a. The acquisition unit 103a acquires a new vehicle control model 102c distributed from the data collection apparatus 1C, and overwrites the old vehicle control model 102c.

The detection unit 103b monitors output data from various kinds of sensors 150, and detects the occurrence of an event serving as a detection unit 103b in the collection condition.

For example, when the detection unit 103b detects the occurrence of an event serving as a trigger to collect vehicle data in the collection condition, the detection unit 103b controls the collection unit 103c to collect vehicle data.

When the occurrence of a trigger to collect vehicle data is detected by the detection unit 103b, the collection unit 103c collects vehicle data based on data output from various kinds of sensors 150, and stores the vehicle data in the vehicle data information 102b. When the occurrence of a trigger to stop the collection of vehicle data is detected by the detection unit 103b, the collection unit 103c stops collecting the vehicle data.

The upload unit 103d continuously uploads the tag data T to the data collection apparatus 1C. When the upload unit 103d receives an upload request for real data R from the data collection apparatus 1C through the communication unit 101, the upload unit 103d uploads the real data R to the data collection apparatus 1C. For example, the upload unit 103d may immediately upload real data R for evaluating a vehicle control model 102c to the data collection apparatus 1C.

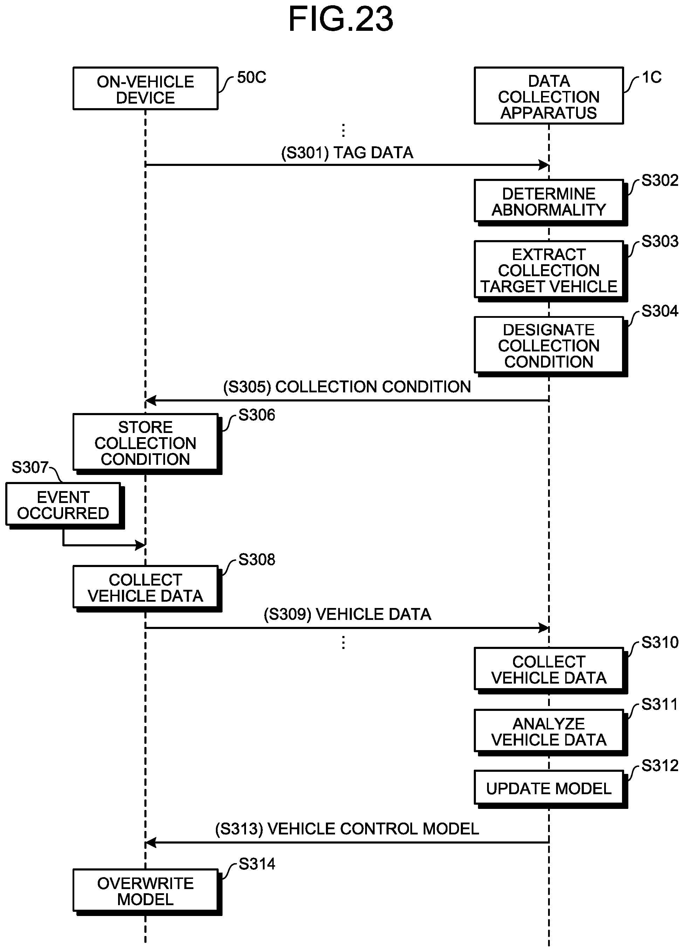

Next, a processing sequence executed by the data collection system S according to the embodiment is described with reference to FIG. 23. FIG. 23 is a diagram illustrating a processing sequence executed by the data collection system S according to the embodiment.

First, the on-vehicle device 50C continuously transmits tag data T indicating overall conditions of each vehicle C (Step S301). Based on this, the data collection apparatus 1C determines a desired behavior, for example, desired abnormality (Step S302).

The data collection apparatus 1C extracts, based on the determination result at Step S302, a vehicle from which vehicle data for evaluating a vehicle control model 102c is to be collected (Step S303), and designates a collection condition including the collection target vehicle (Step S304).

The data collection apparatus 1C distributes the collection condition to each vehicle C (Step S305). The on-vehicle device 50C stores the distributed collection condition therein (Step S306). Based on the occurrence of an event serving as a trigger to collect vehicle data (Step S307), the on-vehicle device 50C collects vehicle data (Step S308).

The collection condition (data) is transmitted in response to a collection condition file and an instruction command. The collection condition file includes a new collection condition file and a change collection condition file, and an update instruction command indicates new registration or change of the files, and a deletion instruction command indicates a file to be deleted. The data collection apparatus 1C grasp collection condition file information on a target vehicle from the past transmission history, and hence can respond by a method for replacing all collection condition files in the target vehicle (all new collection condition files are generated and transmitted together with update instruction). In regard to a collection condition to be detected, when an event satisfying a collection condition among all collection conditions registered in the corresponding on-vehicle device 50C has been detected, processing for generating tag data and storing real data is performed for the collection condition.

The on-vehicle device 50C uploads the collected vehicle data to the data collection apparatus 1C (Step S309), and the data collection apparatus 1C collects the vehicle data (Step S110).

The data collection apparatus 1C analyses vehicle data collected for evaluating the vehicle control model 102c (Step S311), and updates the vehicle control model 102c based on the analysis result (Step S312).

The data collection apparatus 1C distributes the updated vehicle control model 102c to the on-vehicle device 50 (Step S313), and the on-vehicle device 50C acquires the vehicle control model 102c to overwrite the model (Step S314) .

In the above, the vehicle control model 102c has been taken as an example, and the case where the compatibility of parameters related to automatic driving control has been described. However, the embodiment is not limited to automatic driving control as long as the parameters relate to vehicle control.

Consequently, the present embodiment is also applicable to the case of evaluating the compatibility of parameters related to vehicle control during manual driving, for example, parameters of a control program that operates by each electronic control unit (ECU) mounted on a vehicle C. In this case, the data user is a developer of vehicle control technology including not only automatic driving technology but also manual driving.

As described above, the data collection apparatus 1C according to the embodiment includes the collection unit 13a, the determination unit 13b, the extraction unit 13c, and the analysis unit 13e. The collection unit 13a collects vehicle data on a vehicle C from the on-vehicle device 50C mounted on each vehicle C. The determination unit 13b determines a vehicle C indicating a desired behavior based on vehicle data collected by the collection unit 13a. The extraction unit 13c extracts, based on a determination result of the determination unit 13b, a collection condition for evaluation data, which is vehicle data for evaluating parameters related to vehicle control. The analysis unit 13e analyzes the evaluation data collected by the collection unit 13a based on the above-mentioned collection condition.

Consequently, the data collection apparatus 1C according to the embodiment can evaluate the compatibility of parameters related to driving control.

The determination unit 13b determines a vehicle C indicating an abnormal behavior based on vehicle data.

Consequently, the data collection apparatus 1C according to the embodiment can evaluate the compatibility of parameters related to driving control of the vehicle C indicating the abnormal behavior.

The extraction unit 13c extracts, under a collection target vehicle condition as one of the above-mentioned collection conditions, a vehicle C similar to the vehicle C determined by the determination unit 13b to indicate a desired behavior.

Consequently, the data collection apparatus 1C according to the embodiment can collectively regard vehicles C under situations similar to those of the vehicle C indicating the above-mentioned behavior as collection targets, and collect a large amount of vehicle data for evaluating whether the same phenomenon occurs under similar conditions.

The extraction unit 13c extracts different collection data conditions for collection target vehicles as collection data conditions, which are one of the above-mentioned collection conditions.

Consequently, the data collection apparatus 1C according to the embodiment can prevent biased evaluation obtained when only the same vehicle data is collected from a vehicle C selected as a similar collection target.

The above-mentioned parameter relates to a vehicle control model 102c in automatic driving control, and the data collection apparatus 1C according to the embodiment further includes: the update unit 13f that updates the vehicle control model 102c by machine learning based on an analysis result of the analysis unit 13e; and the distribution unit 13d that distributes the vehicle control model 102c updated by the update unit 13f to a vehicle C to be updated.

Consequently, the data collection apparatus 1C according to the embodiment can appropriately update a vehicle control model 102c when the set value of a parameter for the vehicle control model 102c is found to be incompatible, and quickly distribute the vehicle control model 102c to a vehicle C to be updated. In other words, this configuration can contribute to the enhancement of safety of automatic driving control.

In the above-mentioned embodiments, the case where the data collection apparatus 1 and 1A to 1C collect data from the on-vehicle devices 50 and 50A to 50C has been described, but the embodiments are not limited thereto. Specifically, the data collection apparatus 1 and 1A to 1C can collect data from terminal devices such as smartphones and tablet terminals.

The data collection apparatus 1 and 1A to 1C and the on-vehicle devices 50 and 50A to 50C may be used in combination as appropriate.

## Claims

1. A data collection apparatus (1), comprising a processor configured to:
receive a collection request for vehicle acquisition data obtained by each of a plurality of vehicles;
generate collection condition data indicating a plurality of collection conditions of the vehicle acquisition data based on the received collection request;
transmit the generated collection condition data to each of the plurality of vehicles;
set the collection condition data to each of the plurality of vehicles; and
receive and collect vehicle acquisition data satisfying the plurality of collection conditions transmitted from each of the plurality of vehicles,
wherein the processor is further configured to
generate and transmit to each of the plurality of vehicles tag data generation data for generating tag data,
collect, from each of the plurality of vehicles, tag data of vehicle acquisition data satisfying the collection condition data, the tag data generated based on the tag data generation data,
generate transmission instruction data for vehicle acquisition data based on the tag data,
transmit the transmission instruction data to each of the plurality of vehicles, and
receive and collect vehicle acquisition data transmitted from each of the plurality of vehicles based on the transmission instruction data.

2. The data collection apparatus (1) according to claim 1, wherein the processor is further configured to
divide and store the collection condition data in a condition file,
transmit the condition file to each of the plurality of vehicles, and
collect vehicle acquisition data for each of the plurality of collection conditions stored in the condition file.

3. The data collection apparatus (1) according to claim 2, wherein
in the condition file, each of the plurality of collection conditions is stored with a processing type added thereto, and
the processor is further configured to receive vehicle acquisition data from each of the plurality of vehicles by an acquisition method corresponding to the processing type.

4. An on-vehicle device (50), comprising:
a memory configured to store therein a plurality of collection conditions for vehicle acquisition data obtained by a vehicle requested from a data collection apparatus (1),
the collection conditions received from the data collection apparatus (1),
acquire vehicle acquisition data satisfying the plurality of collection conditions stored therein, and
store the vehicle acquisition data therein such that the vehicle acquisition data is identifiable by each of the plurality of collection conditions; and
a processor configured to
select, based on transmission instruction data from the data collection apparatus (1), vehicle acquisition data that matches a corresponding one of the plurality of collection conditions from the memory, and
transmit the vehicle acquisition data to the data collection apparatus,
wherein the memory is configured to store therein tag data generation data for generating tag data, the tag data generation data received from the data collection apparatus (1),
wherein the processor is further configured to
generate, based on the stored tag data generation data, tag data corresponding to and based on the vehicle acquisition data that matches the one of the plurality of collection conditions, and
transmit the generated tag data to the data collections apparatus (1).

5. A data collection system (S) comprising a data collection apparatus (1) according to claim 1 and an on-vehicle device (50) according to claim 4.

6. A data collection method to be executed by a computer, comprising:
receiving a collection request for vehicle acquisition data obtained by each of a plurality of vehicles;
generating collection condition data indicating a plurality of collection conditions of the vehicle acquisition data based on the received collection request;
transmitting the generated collection condition data to each of the plurality of vehicles;
setting the collection condition data to each of the plurality of vehicles; and
receiving and collecting vehicle acquisition data satisfying the plurality of collection conditions transmitted from each of the plurality of vehicles,
wherein the method further comprises
generating and transmitting to each of the plurality of vehicles tag data generation data for generating tag data,
collecting, from each of the plurality of vehicles, tag data of vehicle acquisition data satisfying the collection condition data, the tag data generated based on the tag data generation data,
generating transmission instruction data for vehicle acquisition data based on the tag data,
transmitting the transmission instruction data to each of the plurality of vehicles, and
receiving and collecting vehicle acquisition data transmitted from each of the plurality of vehicles based on the transmission instruction data.

## Patentansprüche

1. Datensammelgerät (1), das einen Prozessor umfasst, der konfiguriert ist, um:
eine Sammelanforderung für Fahrzeugerhebungsdaten zu empfangen, die von jedem einer Vielzahl von Fahrzeugen erhalten werden;
Sammelbedingungsdaten zu generieren, die eine Vielzahl von Sammelbedingungen der Fahrzeugerhebungsdaten basierend auf der empfangenen Sammelanforderung angeben;
die generierten Sammelbedingungsdaten an jedes der Vielzahl von Fahrzeugen zu übertragen;
die Sammelbedingungsdaten für jedes der Vielzahl von Fahrzeugen einzustellen; und
Fahrzeugerhebungsdaten zu empfangen und zu sammeln, die die Vielzahl von Sammelbedingungen erfüllen, die von jedem der Vielzahl von Fahrzeugen übertragen werden,
wobei der Prozessor ferner dazu konfiguriert ist,
die Vielzahl von Fahrzeug-Tag-Daten-Generierungsdaten zum Generieren von Tag-Daten, Sammeln von jedem der Vielzahl von Fahrzeugen, Tag-Daten von Fahrzeugerhebungsdaten, die die Sammelbedingungsdaten erfüllen, zu erheben und zu übertragen, wobei die Tag-Daten basierend auf den Tag-Daten-Generierungsdaten generiert werden, Übertragungsanweisungsdaten für
Fahrzeugerhebungsdaten basierend auf den Tag-Daten zu generieren,
die Übertragungsanweisungsdaten an jedes der Vielzahl von Fahrzeugen zu übertragen, und
Fahrzeugerhebungsdaten, die von jedem der Vielzahl von Fahrzeugen basierend auf den Übertragungsanweisungsdaten übertragen werden, zu empfangen und zu sammeln.

2. Datensammelgerät (1) nach Anspruch 1, wobei der Prozessor weiter dazu konfiguriert ist
die Sammelbedingungsdaten in einer Bedingungsdatei aufzuteilen und zu speichern,
die Bedingungsdatei an jedes der Vielzahl von Fahrzeugen zu übertragen, und
Fahrzeugerhebungsdaten für jede der Vielzahl von Sammelbedingungen, die in der Bedingungsdatei gespeichert sind, zu sammeln.

3. Sammelgerät (1) nach Anspruch 2, wobei
in der Bedingungsdatei jede der Vielzahl von Sammelbedingungen mit einem Verarbeitungstyp dazu hinzugefügt gespeichert ist, und der Prozessor ferner dazu konfiguriert ist, Fahrzeugerhebungsdaten von jedem der Vielzahl von Fahrzeugen durch ein Erhebungsverfahren, das dem Verarbeitungstyp entspricht, zu empfangen.

4. Bordeigene Vorrichtung (50), die Folgendes umfasst:
einen Speicher, der konfiguriert ist, um darin eine Vielzahl von Sammelbedingungen für Fahrzeugerhebungsdaten zu speichern, die von einem Fahrzeug erhalten werden, die von einem Datensammelgerät (1) angefordert werden,
wobei die Sammelbedingungen von dem Datensammelgerät (1) empfangen werden,
Fahrzeugerhebungsdaten zu erheben, die die Vielzahl von Sammelbedingungen, die darin gespeichert sind, erfüllen, und
die Fahrzeugerhebungsdaten darin derart zu speichern, dass die Fahrzeugerhebungsdaten von jeder der Vielzahl von Sammelbedingungen identifizierbar sind; und
einen Prozessor, der dazu konfiguriert ist,
basierend auf Übertragungsanweisungsdaten von dem Datensammelgerät (1) Fahrzeugerhebungsdaten auszuwählen, die mit einer entsprechenden der Vielzahl von Sammelbedingungen aus dem Speicher übereinstimmen, und
die Fahrzeugerhebungsdaten an das Datensammelgerät zu übertragen,
wobei der Speicher dazu konfiguriert ist, darin Tag-Daten-Generierungsdaten zum Generieren von Tag-Daten zu speichern, wobei die Tag-Daten-Generierungsdaten von dem Datensammelgerät (1) empfangen werden,
wobei der Prozessor ferner dazu konfiguriert ist,
basierend auf den gespeicherten Tag-Daten-Generierungsdaten-Tag-Daten zu generieren, die den Fahrzeugerhebungsdaten, die mit einer der Vielzahl von
Sammelbedingungen übereinstimmen, entsprechen und darauf basieren, und
die generierten Tag-Daten an das Datensammelgerät (1) zu übertragen.

5. Datensammelsystem (S), das ein Datensammelgerät (1) nach Anspruch 1 und eine bordeigene Vorrichtung (50) nach Anspruch 4 umfasst.

6. Datensammelverfahren, das von einem Computer ausgeführt werden soll, das Folgendes umfasst:
Empfangen einer Sammelanforderung für Fahrzeugerhebungsdaten, die von jedem einer Vielzahl von Fahrzeugen erhalten werden;
Generieren von Sammelbedingungsdaten, die eine Vielzahl von Sammelbedingungen der Fahrzeugerhebungsdaten basierend auf der empfangenen Sammelanforderung angeben;
Übertragen der generierten Sammelbedingungsdaten an jedes der Vielzahl von Fahrzeugen;
Einstellen der Sammelbedingungsdaten für jedes der Vielzahl von Fahrzeugen; und
Empfangen und Sammeln von Fahrzeugerhebungsdaten, die die Vielzahl von Sammelbedingungen, die von jedem der Vielzahl von Fahrzeugen übertragen wird, erfüllen,
wobei das Verfahren ferner Folgendes umfasst
Generieren und Übertragen zu jedem der Vielzahl von Fahrzeugen von Tag-Daten-Generierungsdaten zum Generieren von Tag-Daten,
Sammeln von jedem der Vielzahl von Fahrzeugen von Tag-Daten der Fahrzeugerhebungsdaten, die die Sammelbedingungsdaten erfüllen, wobei die Tag-Daten basierend auf den Tag-Datengenerierungsdaten generiert werden,
Generieren von Übertragungsanweisungsdaten für Fahrzeugerhebungsdaten basierend auf den Tag-Daten,
Übertragen der Übertragungsanweisungsdaten an jedes der Vielzahl von Fahrzeugen, und
Empfangen und Sammeln von Fahrzeugerhebungsdaten, die von jedem der Vielzahl von Fahrzeugen basierend auf den Übertragungsanweisungsdaten übertragen werden.

## Revendications

1. Appareil de collecte de données (1), comprenant un processeur configuré pour :
recevoir une demande de collecte de données d'acquisition de véhicules obtenues par chacun d'une pluralité de véhicules ;
générer des données de condition de collecte indiquant une pluralité de conditions de collecte des données d'acquisition de véhicule sur la base de la demande de collecte reçue ;
transmettre les données de conditions de collecte générées à chacun de la pluralité de véhicules ;
définir les données de conditions de collecte pour chacun de la pluralité de véhicules ; et
recevoir et collecter des données d'acquisition de véhicule satisfaisant à la pluralité de conditions de collecte transmises par chacun de la pluralité de véhicules,
dans lequel le processeur est en outre configuré pour générer et transmettre à chacun de la pluralité de véhicules des données de génération d'étiquetage pour générer des données d'étiquetage,
collecter, à partir de chacun de la pluralité de véhicules, des données d'étiquetage de données d'acquisition de véhicule satisfaisant aux données de conditions de collecte, les données d'étiquetage étant générées sur la base des données de génération de données d'étiquetage,
générer des données d'instruction de transmission pour les données d'acquisition du véhicule sur la base des données d'étiquetage,
transmettre les données d'instruction de transmission à chacun de la pluralité de véhicules, et
recevoir et collecter les données d'acquisition du véhicule transmises par chacun de la pluralité de véhicules sur la base des données d'instruction de transmission.

2. Appareil de collecte de données (1) selon la revendication 1, dans lequel le processeur est en outre configuré pour :
diviser et stocker les données de condition de collecte dans un fichier de conditions,
transmettre le fichier de conditions à chacun de la pluralité de véhicules, et
collecter des données d'acquisition du véhicule pour chacune de la pluralité de conditions de collecte stockées dans le fichier de conditions.

3. Appareil de collecte de données (1) selon la revendication 2, dans lequel
dans le fichier de conditions, chacune de la pluralité de conditions de collecte est stockée avec un type de traitement ajouté, et
le processeur est en outre configuré pour recevoir des données d'acquisition de véhicule de chacun de la pluralité de véhicules par un procédé d'acquisition correspondant au type de traitement.

4. Dispositif embarqué (50), comprenant :
une mémoire configurée pour
stocker sur celle-ci une pluralité de conditions de collecte des données d'acquisition de véhicule obtenues par un véhicule demandées à un appareil de collecte de données (1), les conditions de collecte étant reçues de l'appareil de collecte de données (1),
acquérir des données d'acquisition de véhicule satisfaisant à la pluralité de conditions de collecte stockées dans celle-ci, et
stocker les données d'acquisition du véhicule de manière à ce que les données d'acquisition du véhicule soient identifiables par chacune de la pluralité de conditions de collecte ; et
un processeur configuré pour
sélectionner, sur la base des données d'instruction de transmission provenant de l'appareil de collecte de données (1), des données d'acquisition du véhicule qui correspondent à l'une de la pluralité de conditions de collecte de la mémoire, et
transmettre les données d'acquisition du véhicule à l'appareil de collecte de données,
dans lequel la mémoire est configurée pour stocker des données de génération de données d'étiquetage pour générer des données d'étiquetage, les données de génération de données d'étiquetage étant reçues de l'appareil de collecte de données (1),
dans lequel le processeur est en outre configuré pour générer, sur la base des données de génération de données d'étiquetage stockées, les données d'étiquetage correspondant aux et basées sur les données d'acquisition de véhicule qui correspond à l'une d'une pluralité de conditions de collecte, et
transmettre les données d'étiquetage générées à l'appareil de collecte de données (1).

5. Système de collecte de données (S) comprenant un appareil de collecte de données (1) selon la revendication 1 et un dispositif embarqué (50) selon la revendication 4.

6. Procédé de collecte de données à exécuter par ordinateur, comprenant :
la réception d'une demande de collecte de données d'acquisition de véhicules obtenues par chacun d'une pluralité de véhicule ;
la génération de données de condition de collecte indiquant une pluralité de conditions de collecte des données d'acquisition de véhicule sur la base de la demande de collecte reçue ;
la transmission des données de condition de collecte générées à chacun de la pluralité de véhicule ;
la définition de données de conditions de collecte pour chacun de la pluralité de véhicules ; et
la réception et la collecte de données d'acquisition de véhicules satisfaisant à la pluralité de conditions de collecte transmises par chacun de la pluralité de véhicules,
dans lequel le procédé comprend en outre
la génération et la transmission à chacun de la pluralité de véhicules des données de génération de données d'étiquetage pour générer des données d'étiquetage,
la collecte, à partir de chacun de la pluralité de véhicules, des données d'étiquetage des données d'acquisition du véhicule satisfaisant aux données de condition de collecte, les données d'étiquetage étant générées sur la base des données de génération de données d'étiquetage,
la génération des données d'instruction de transmission pour des données d'acquisition de véhicule sur la base des données d'étiquetage,
la transmission des données d'instruction de transmission à chacun de la pluralité de véhicules, et
la réception et la collecte des données d'acquisition de véhicule transmises par chacun de la pluralité de véhicules sur la base des données d'instruction de transmission.
